# NEUE EUROPÄISCHE PATENTSCHRIFT

(11) **EP 1 557 298 B2**
(45) Veröffentlichungstag und Bekanntmachung des Hinweises auf die Entscheidung über den Einspruch: **13.02.2013**
(45) Hinweis auf die Patenterteilung: 05.03.2008
(21) Anmeldenummer: 05000638.6
(22) Anmeldetag: 14.01.2005
(51) Int. Cl.: B60D 1/54

(54) **Anhängekupplung**
Trailer coupling
Attelage de remorque

(30) Priorität: 22.01.2004 DE 102004004503
(43) Veröffentlichungstag der Anmeldung: 27.07.2005
(73) Patentinhaber: SCAMBIA INDUSTRIAL DEVELOPMENTS AKTIENGESELLSCHAFT, 9494 Schaan (LI)
(72) Erfinder: Rimmelspacher, Bernhard, 76287 Rheinstetten (DE); Gentner, Wolfgang, 71254 Ditzingen (DE); Riehle, Jörg, 71679 Asperg (DE); Mayer, Günther, 74357 Bönnigheim (DE)
(74) Vertreter: Hoeger, Stellrecht & Partner Patentanwälte

(56) Entgegenhaltungen:
- EP-A- 1 024 036
- EP-A- 1 275 533
- EP-A- 1 288 026
- EP-A- 1 428 697
- EP-A- 1 504 928

## Beschreibung

Anhängekupplung für Kraftfahrzeuge umfassend ein Lagerelement, ein gegenüber dem Lagerelement zwischen einer Arbeitsstellung und einer Ruhestellung um eine Schwenkachse eines Schwenklagers verschwenkbares und zumindest in der Arbeitsstellung zwischen einer Schwenkstellung und einer Fixierstellung in Richtung der Schwenkachse verschiebbares Anhängeelement und eine Fixiereinrichtung, mit welcher das Anhängeelement zumindest in der Arbeitsstellung bei Erreichen der Fixierstellung unbewegbar am Lagerelement fixierbar ist.

Derartige Anhängekupplungen sind beispielsweise aus der DE 100 17 013, EP1428697 und EP1504928 bekannt.

Bei diesen ist die Fixierung des Anhängeelements in der Fixierstellung mit großem Bedienungskomfort, konstruktiv jedoch komplex gelöst.

Der Erfindung liegt daher die Aufgabe zugrunde, eine Anhängekupplung mit vereinfachter Fixierung des Anhängeelements am Lagerelement zu schaffen.

Diese Aufgabe wird bei einer Anhängekupplung erfindungsgemäß durch die Merkmale des Anspruchs 1 gelöst.

Der Vorteil der erfindungsgemäßen Lösung ist darin zu sehen, daß mit dem Vorsehen eines Sperrkörpers und einer Sperrfläche eine einfache Möglichkeit einer Blockierung des Lagerkörpers in der Fixierstellung gegeben ist, die außerdem eine ausreichende Funktionssicherheit in der Sperrstellung des Sperrkörpers bietet.

Zur sicheren Fixierung des Anhängeelements am Lagerelement ist vorgesehen, daß der Lagerkörper das Anhängeelement sowohl in der Schwenkstellung als auch in der Fixierstellung gegenüber dem Aufnahmekörper lagert, wobei die Lagerung in der Schwenkstellung eine drehbare Lagerung darstellt, während in der Fixierstellung die Lagerung des Lagerkörpers in dem Aufnahmekörper im Sinne einer sicheren Abstützung des Anhängeelements gegenüber dem Lagerelement erfolgt.

Eine besonders günstige Ausbildung des Anhängeelements sieht vor, daß dieses ein erstes, die Kupplungskugel tragendes Ende sowie ein zweites freies Ende aufweist.

Hinsichtlich der Anordnung des Lagerkörpers wurden ebenfalls keine näheren Angaben gemacht. So ist vorzugsweise vorgesehen, daß der Lagerkörper an dem Anhängeelement zwischen dem Kugelhals und dem freien Ende angeordnet ist.

Ferner wurden auch hinsichtlich der Ausbildung des Aufnahmekörpers keine weiteren Angaben gemacht. Besonders günstig ist es, wenn der Aufnahmekörper eine erste Öffnung aufweist, durch welche der Lagerkörper ausgehend vom Kugelhals in den Aufnahmekörper eingreift, und eine zweite, der ersten Öffnung gegenüberliegende Öffnung.

Um den Sperrkörper in einfacher Weise von der Freigabestellung in die Sperrstellung bewegen zu können, ist vorgesehen, daß die Blockiereinrichtung einen Sperrkörperantrieb aufweist, mit welchem der Sperrkörper von einer diesen von der Freigabestellung in Richtung der Sperrstellung bewegenden Kraft beaufschlagbar ist.

Ein derartiger Sperrkörperantrieb kann in unterschiedlichster Art und Weise ausgebildet sein.

Beispielsweise wäre es denkbar, den Sperrkörper unmittelbar mit einer Druckfeder zu beaufschlagen.

Eine besonders zweckmäßige Lösung sieht vor, daß der Sperrkörperantrieb das Antriebselement aufweist, mit welchem der Sperrkörper von der Freigabestellung in die Sperrstellung bewegbar ist.

Dabei ist das Antriebselement durch den elastischen Kraftspeicher beaufschlagt, so daß die Möglichkeit besteht, das Antriebselement stets mit der Kraft des elastischen Kraftspeichers beaufschlagt zu halten und somit stets auf den Sperrkörper wirksam werden kann.

Hinsichtlich der Bewegungsmöglichkeiten des Antriebselements wurden bislang keine näheren Angaben gemacht.

So wäre es beispielsweise denkbar, das Antriebselement so auszubilden, daß durch Relativverdrehung desselben zum Sperrkörper ein Verschieben des mindestens einen Sperrkörpers möglich ist.

Als konstruktiv günstig hat sich erwiesen, wenn das Antriebselement in einer Aktivierungsrichtung relativ zu dem dieses aufnehmenden Element, also im Fall der Aufnahme des Antriebselements im Lagerkörper relativ zum Lagerkörper, verschiebbar angeordnet ist, da mit einer derartigen Linearverschiebbarkeit in einfacher Weise der Sperrkörper betätigbar ist.

Die Betätigung des Sperrkörpers läßt sich dabei günstig und sicher dadurch realisieren, wenn das Antriebselement eine Antriebskulisse mit einer Aufnahme aufweist, in welche der mindestens eine Sperrkörper in der Freigabestellung eintaucht, und eine Verschiebefläche mit welcher der mindestens eine Sperrkörper von der Freigabestellung in die Sperrstellung bewegbar ist. Mit einer derartigen Verschiebefläche läßt sich in einfacher Weise und insbesondere sicher der Sperrkörper von der Freigabestellung in die Sperrstellung bewegen.

Um auch den Sperrkörper in der Sperrstellung nicht nur zu halten, sondern beim Auftreten von Spiel den Sperrkörper nachstellend in Richtung der Sperrfläche bewegen zu können, ist vorzugsweise vorgesehen, daß sich an die Verschiebefläche eine Keilfläche anschließt, welche den Sperrkörper in der Sperrstellung in der Bewegungsrichtung nachstellend beaufschlagt.

Um auch ein durch verschleißbedingtes Spiel zu vermeiden, ist es besonders günstig, wenn die Blockiereinrichtung auf die formschlüssigen Fixierelemente spielfrei nachstellend wirkt, so daß jedes durch Verschleiß auftretende Spiel ebenfalls wiederum durch die nachstellende Wirkung der Blockiereinrichtung vermieden werden kann.

Als besonders vorteilhaft hat es sich erwiesen, wenn die Blockiereinrichtung in der Sperrstellung des mindestens einen Sperrkörpers aufgrund dessen Zusammenwirken mit der Sperrfläche den Lagerkörper in Richtung der Fixierstellung kraftbeaufschlagt, so daß dadurch eine dauerhafte feste Fixierung des Anhängeelements in dem Lagerelement erreichbar ist.

Besonders günstig ist es dabei, wenn die Blockiereinrichtung formschlüssige Fixierelemente der Fixiereinrichtung in spielfreier Anlage hält und somit auch insgesamt die Fixierung des Anhängeelements spielfrei relativ zum Lagerelement erfolgen kann.

Das Zusammenwirken des Sperrkörpers mit der Sperrfläche ergibt in besonders einfacher Weise eine Beaufschlagung des Lagerkörpers in Richtung der Fixierstellung, wenn die Sperrfläche schräg oder geneigt zur Bewegungsrichtung verläuft.

Konstruktiv ist vorgesehen, daß der mindestens eine Sperrkörper und der Sperrkörperantrieb in dem Lagerkörper angeordnet ist und somit mit dem Lagerkörper mitbewegbar ist.

Eine derartige Lösung hat noch den Vorteil, daß damit eine sehr raumsparende Integration des Sperrkörpers und des Sperrkörperantriebs möglich ist.

Ferner ist es günstig, wenn in dem Lagerkörper der mindestens eine Sperrkörper zwischen der Freigabestellung und der Sperrstellung in einer Bewegungsrichtung quer zur Verschieberichtung desselben bewegbar geführt ist.

Hinsichtlich der Ausbildung der Blockiereinrichtung im Hinblick auf eine Betätigung des Sperrkörperantriebs wurden bislang keine weiteren Angaben gemacht. So ist jede denkbare Betätigung des Sperrkörperantriebs möglich.

Außerdem ist vorgesehen, daß die Blokiereinrichtung eine auf den Sperrkörperantrieb wirkende Betätigungseinrichtung umfaßt, mit welcher auf das Antriebselement entgegen der Kraftwirkung des elastischen Kraftspeichers einwirkbar ist, und daß im Hinblick auf eine vorteilhafter Bedienbarkeit der Betätigungseinrichtung die Betätigungseinrichtung am Lagerelement angeordnet ist und der Sperrkörperantrieb am Anhängeelement.

In diesem Falle ist es zweckmäßig, wenn ein Betätigungselement der Betätigungseinrichtung über das freie Ende des Anhängeelements übersteht und somit über das Betätigungselement ein Einwirken auf das Antriebselement möglich ist.

Zweckmäßigerweise ist hierzu das Betätigungselement koaxial zur Schwenkachse angeordnet, so daß sich ein Drehen des Anhängeelements um die Schwenkachse in einfacher Weise konstruktiv abfangen läßt.

Beispielsweise wäre es denkbar, das Betätigungselement mit einer Drehkupplung zu versehen.

Konstruktiv besonders einfach ist es jedoch, wenn das Betätigungselement um die Schwenkachse drehbar im Anhängeelement gelagert ist.

Die Einwirkung auf den Sperrkörperantrieb läßt sich besonders einfach realisieren, wenn das Betätigungselement zum Aufheben der auf das Antriebselement wirkenden Kraft des elastischen Kraftspeichers in seinem über das freie Ende des Anhängeelements überstehenden Bereich in Richtung des freien Endes des Anhängeelements beaufschlagbar ist.

Besonders günstig ist es ferner, wenn mit der Betätigungseinrichtung bei in Freigabestellung stehendem Sperrkörper das Anhängeelement von der Fixierstellung in die Schwenkstellung verschiebbar ist, so daß die Betätigungseinrichtung nicht nur dazu eingesetzt wird, auf den Sperrkörperantrieb einzuwirken, um den mindestens einen Sperrkörper von der Sperrstellung in die Freigabestellung zu bewegen, sondern gleichzeitig die Betätigungseinrichtung auch noch dazu eingesetzt werden kann, das Anhängeelement von der Fixierstellung aktiv in die Schwenkstellung zu verschieben.

Darüber hinaus läßt sich die Betätigungseinrichtung vorteilhafterweise nicht nur dazu einsetzen, das Anhängeelement in die Schwenkstellung zu verschieben, sondern auch dazu, das Anhängeelement in der Schwenkstellung in der Verschieberichtung definiert zu positionieren, das heißt in der Verschieberichtung in einer definierten, der Schwenkstellung zugeordneten Position relativ zum Lagerelement zu halten, so daß der Lagerkörper die Möglichkeit hat, gemeinsam mit dem Aufnahmekörper das Schwenklager für das Anhängeelement zu bilden.

Die Einwirkung der Betätigungseinrichtung auf das Betätigungselement kann dabei in unterschiedlichster Art und Weise erfolgen.

So sieht eine Ausführungsform vor, daß das Betätigungselement mit einem Führungshebel der Betätigungseinrichtung gekoppelt ist.

Beispielsweise ist im Fall der Anordnung der Betätigungseinrichtung am Lagerelement vorgesehen, daß der Führungshebel an dem Lagerelement schwenkbar gelagert ist, so daß durch Verschwenken des Führungshebels unter Ausnutzung der Hebelgesetze eine Einwirkung auf das Betätigungselement erfolgen kann.

Alternativ dazu ist vorgesehen, daß das Betätigungselement als Zahnstange ausgebildet ist, welche mit einem Zahnritzel der Betätigungseinrichtung kämmt, so daß mit der Betätigungseinrichtung die Möglichkeit besteht, durch Drehen des Zahnritzels auf das Betätigungselement einzuwirken.

Hinsichtlich der Ausbildung der Betätigungseinrichtung selbst wurden bislang keine näheren Angaben gemacht. So ist jede Betätigungseinrichtung mit einem Einwirkungselement, vorzugsweise zur manuellen Einwirkung auf das Betätigungselement, versehen.

Um die Möglichkeit zu schaffen, die manuelle Einwirkung vor Rückkehr des Anhängeelements in die Fixierstellung zu beenden, insbesondere um die Möglichkeit zu schaffen, nur dazu manuell auf die Betätigungseinrichtung einzuwirken, daß das Anhängeelement von der Fixierstellung in die Schwenkstellung übergeht, ist es zweckmäßig, wenn die Betätigungseinrichtung mit einem zwischen dem Betätigungselement und dem Einwirkungselement vorgesehenen Freilauf versehen ist.

Hinsichtlich der Frage, ob die Freigabestellung der Sperrkörper in der Schwenkstellung aufrecht erhalten wird oder nicht, wurden bislang keine näheren Angaben gemacht. So wäre es beispielsweise denkbar, den mindestens einen Sperrkörper in der Freilaufstellung wieder in eine Sperrstellung zu überführen, in welcher dieser die Schwenkstellung definiert aufrecht erhält.

Eine andere Möglichkeit sieht vor, den mindestens einen Sperrkörper durch Verrasten des Antriebselements relativ zum Lagerkörper festzulegen und somit die Kraftwirkung des elastischen Kraftspeichers des Sperrkörperantriebs auf den Sperrkörper zu blockieren.

Eine besonders einfache Möglichkeit sieht jedoch vor, daß der Aufnahmekörper in der Schwenkstellung des Anhängeelements den mindestens einen Sperrkörper in der Freigabestellung hält.

Besonders einfach läßt sich dies dadurch realisieren, daß der Aufnahmekörper eine auf den mindestens einen Sperrkörper wirkende Fläche aufweist.

Hinsichtlich der speziellen Ausbildung der Blockiereinrichtung, insbesondere bei Anordnen des Sperrkörperantriebs und der Sperrkörper am Anhängeelement wurden bislang keine näheren Angaben gemacht. So sieht eine zweckmäßige Lösung vor, daß der mindestens eine Sperrkörper auf einer dem Kugelhals abgewandten Seite des Lagerkörpers am Anhängeelement vorgesehen ist.

Zweckmäßigerweise ist der mindestens eine Sperrkörper in seitlichen Führungsöffnungen des Anhängeelements in der Bewegungsrichtung geführt angeordnet.

Die Führungsöffnungen können prinzipiell an beliebiger Stelle des Anhängeelements angeordnet sein. Besonders zweckmäßig ist es, wenn die seitlichen Führungsöffnungen nahe des freien Endes des Anhängeelements angeordnet sind.

Zum Anordnen des Antriebselements in dem Anhängeelement wurden ebenfalls keine weiterführenden Angaben gemacht. So ist vorzugsweise vorgesehen, daß das Antriebselement in einer Ausnehmung im Anhängeelement angeordnet ist.

Günstigerweise ist dabei die Ausnehmung so ausgebildet, daß sie sich von einer am freien Ende des Anhängeelements vorgesehenen Öffnung in das Anhängeelement hineinerstreckt.

Die Ausnehmung könnte dabei parallel oder schräg zur Schwenkachse verlaufen.

Eine günstige Lösung sieht jedoch vor, daß die Ausnehmung koaxial zur Schwenkachse verläuft.

Hinsichtlich der Abstützung des elastischen Kraftspeichers, welcher das Antriebselements beaufschlagt, ist zweckmäßigerweise vorgesehen, daß sich der elastische Kraftspeicher auf einem der Öffnung gegenüberliegenden Boden der Ausnehmung abstützt.

Hinsichtlich der Fixierung des Anhängeelements relativ zum Lagerelement wurden bislang keine näheren Angaben gemacht.

So ist alternativ oder ergänzend zu den bislang beschriebenen Ausführungsbeispielen vorgesehen, daß das Lagerelement einen Aufnahmekörper mit einer Öffnung aufweist, von welcher ausgehend ein Lagerkörper des Anhängeelements in den Aufnahmekörper eingreift, und daß das Anhängeelement ein erstes Formschlußelement aufweist, welches in der Schwenkstellung des Anhängeelements außer Eingriff mit einem zweiten am Aufnahmekörper vorgesehenen Formschlußelement steht und welches zumindest in der Arbeitsstellung beim Verschieben des Anhängeelements von der Schwenkstellung in die Fixierstellung mit dem zweiten Formschlußelement des Aufnahmekörpers in Eingriff bringbar ist.

Um das erste und das zweite Formschlußelement einfach in Eingriff bringen zu können, ist bei einer konstruktiv zweckmäßigen Lösung vorgesehen, daß das zweite Formschlußelement auf einer dem Kugelhals zugewandten Seite des Aufnahmekörpers angeordnet ist.

Besonders günstig ist es dabei, wenn das zweite Formschlußelement in einem stirnseitigen Bereich des Aufnahmekörpers angeordnet ist.

Um das zweite Formschlußelement möglichst einfach herstellen zu können, ist vorzugsweise vorgesehen, daß das zweite Formschlußelement einstückig an dem Aufnahmekörper angeformt ist.

Ferner ist zweckmäßigerweise vorgesehen, daß das erste Formschlußelement einstückig an das Anhängeelement angeformt ist.

Die Position des ersten Formschlußelements ist vorzugsweise so gewählt, daß das erste Formschlußelement im Bereich eines Übergangs vom Kugelhals zum Lagerkörper angeordnet ist.

Um ferner auch in der Ruhestellung das Anhängeelement formschlüssig fixieren zu können, ist vorzugsweise vorgesehen, daß der Aufnahmekörper ein drittes Formschlußelement aufweist, mit welchem das erste Formschlußelement in der Ruhestellung in Eingriff bringbar ist.

Zweckmäßigerweise ist dabei das dritte Formschlußelement identisch wie das zweite Formschlußelement ausgebildet.

Um sicherzustellen, daß das Anhängeelement relativ zum Lagerelement nur in der Arbeitsstellung und in der Ruhestellung von der Schwenkstellung in die Fixierstellung übergehen kann, ist vorzugsweise vorgesehen, daß der Lagerkörper eine Führungsbahn aufweist, auf welcher einem Anhängeelement angeordnetes Führungselement aufliegt, wenn das Anhängeelement außerhalb der Arbeitsstellung und der Ruhestellung steht.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische Darstellung eines ersten Ausführungsbeispiels einer erfindungsgemäßen Anhängekupplung montiert an einem Heck eines Fahrzeugs;
- Fig. 2: eine perspektivische Darstellung des ersten Ausführungsbeispiels einer erfindungsgemäßen Anhängekupplung mit in Arbeitsstellung stehendem Anhängeelement;
- Fig. 3: eine perspektivische Darstellung ähnlich Fig. 2 mit in Ruhestellung stehendem Anhängeelement;
- Fig. 4: einen Schnitt längs Linie 4-4 in Fig. 2 bei in Fixierstellung stehendem Anhängeelement;
- Fig. 5: einen Schnitt ähnlich Fig. 4 unmittelbar nach Überführen von Sperrkörpern in eine Freigabestellung;
- Fig. 6: einen Schnitt ähnlich Fig. 4 bei Erreichen einer Schwenkstellung des Anhängeelements;
- Fig. 7: eine perspektivische Darstellung ähnlich Fig. 2 bei in Schwenkstellung und in Arbeitsstellung stehendem Anhängeelement;
- Fig. 8: eine perspektivische Darstellung ähnlich Fig. 3 bei in Schwenkstellung und Ruhestellung stehendem Anhängeelement;
- Fig. 9: eine Darstellung ähnlich Fig. 2 eines zweiten Ausführungsbeispiels einer erfindungsgemäßen Anhängekupplung;
- Fig. 10: einen Schnitt längs Linie 10-10 in Fig. 9 bei in Fixierstellung verrasteter Betätigungseinrichtung;
- Fig. 11: einen Schnitt ähnlich Fig. 10 bei gelöster Verrastung der Betätigungseinrichtung;
- Fig. 12: eine Darstellung ähnlich Fig. 2 eines dritten Ausführungsbeispiels einer erfindungsgemäßen Anhängekupplung;
- Fig. 13: einen Schnitt längs Linie 13-13 durch ein viertes Ausführungsbeispiel einer erfindungsgemäßen Anhängekupplung;
- Fig. 14: einen Schnitt längs Linie 14-14 in Fig. 13;
- Fig. 15: eine perspektivische Darstellung ähnlich Fig. 2 des vierten Ausführungsbeispiels der erfindungsgemäßen Betätigungseinrichtung bei vollständiger Blockierung in Fixierstellung;
- Fig. 16: eine Darstellung ähnlich Fig. 15 bei frei drehbarer Freilaufscheibe;
- Fig. 17: eine Darstellung ähnlich Fig. 15 bei Einwirken auf ein Antriebselement eines Sperrkörperantriebs mit der Betätigungseinrichtung des vierten Ausführungsbeispiels und
- Fig. 18: eine Darstellung ähnlich Fig. 15 bei mittels der Betätigungseinrichtung in Schwenkstellung ausgefahrenem Anhängeelement.

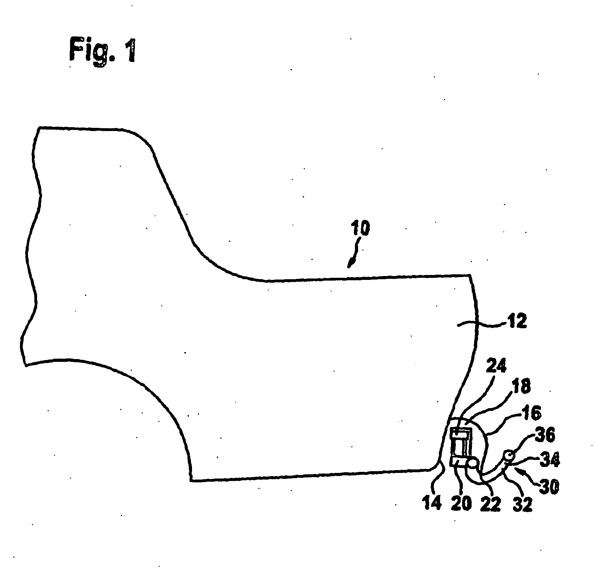

Ein erstes Ausführungsbeispiel einer erfindungsgemäßen Anhängekupplung ist, wie in Fig. 1 dargestellt, an einer Fahrzeugkarosserie 10, und zwar zwischen einer Rückseite 14 des Heckbereichs 12 und einem Stoßfänger 16 montiert. In einem zwischen der Rückseite 14 und dem Stoßfänger 16 gebildeten Zwischenraum 18 und oberhalb einer Unterkante 22 des Stoßfängers 16 ist ein Lagerelement 20 der Anhängekupplung angeordnet, welches durch einen mit der Fahrzeugkarosserie 10 verbundenen Querträger 24, der ebenfalls im Zwischenraum 18 verläuft, gehalten ist.

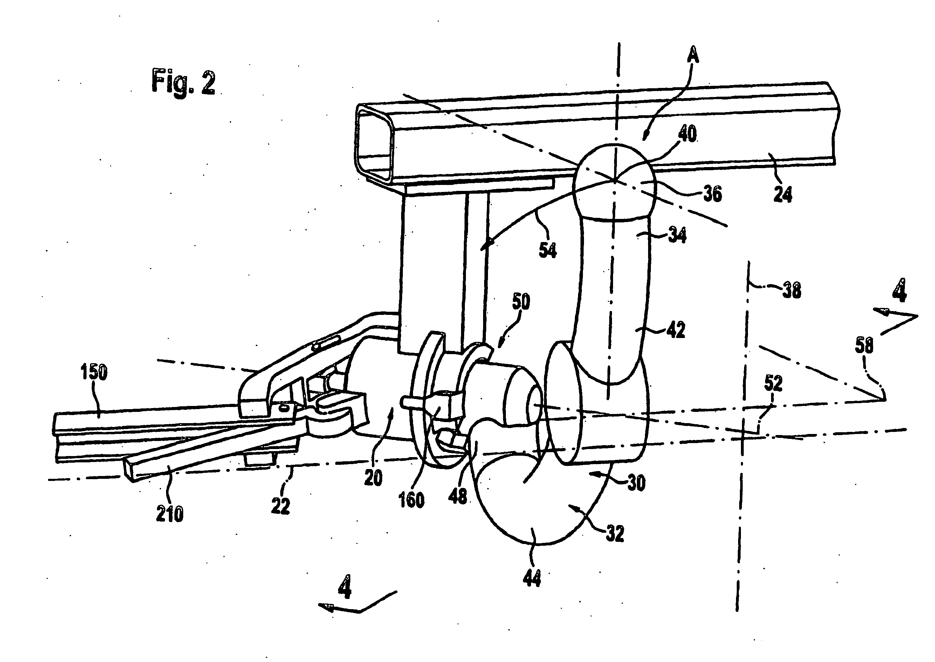

An dem Lagerelement 20 ist ein als Ganzes mit 30 bezeichnetes Anhängeelement bewegbar gelagert, wobei das Anhängeelement einen Kugelhals 32 aufweist, welcher an einem ersten Ende 34 eine Kupplungskugel 36 trägt. In einer in Fig. 2 dargestellten Arbeitsstellung ist die Kupplungskugel 36 so angeordnet, daß sie von einer Längsmittelebene 38 der Fahrzeugkarosserie 10 symmetrisch geschnitten wird und somit die Längsmittelebene auch durch einen Kugelmittelpunkt 40 der Kupplungskugel 36 verläuft.

Ferner verläuft zumindest ein vom ersten Ende 34 des Kugelhalses 32 ausgehender erster Bereich 42 des Kugelhalses 32 ebenfalls symmetrisch zu der Längsmittelebene 28 und führt anschließend mittels einer Umbiegung 44 zu einem zweiten Ende 48 des Kugelhalses 32.

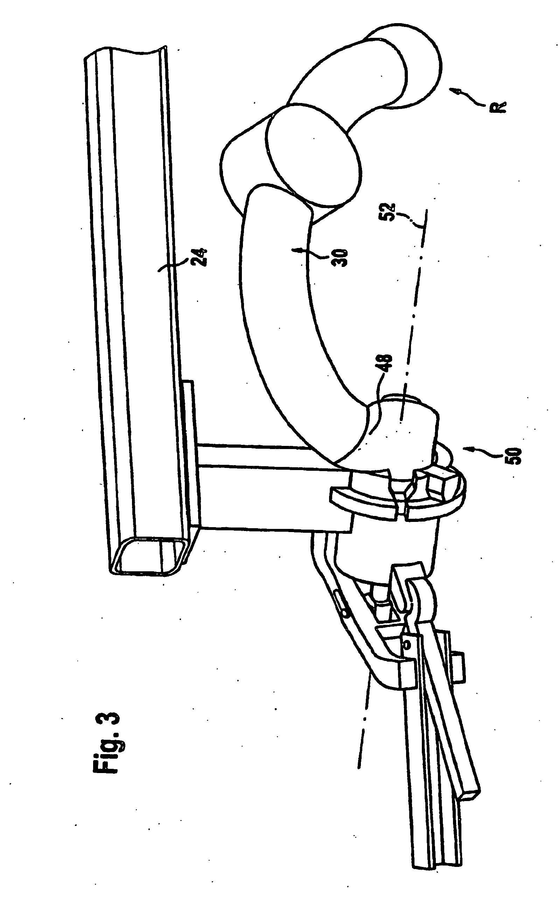

Das Anhängeelement 30 ist seinerseits mittels eines als Ganzes mit 50 bezeichneten Schwenklagers um eine Schwenkachse 52 am Lagerelement 20 schwenkbar gelagert, wobei das Anhängeelement 30 durch Verschwenken um die Schwenkachse 52 entweder in der in Fig. 2 dargestellten Arbeitsstellung A positionierbar ist oder in einer in Fig. 3 dargestellten im wesentlichen durch den Stoßfänger 16 abgedeckten und im Zwischenraum 18 liegenden Ruhestellung R, wobei eine Schwenkbewegung um die Schwenkachse 52 von der Arbeitsstellung A in die Ruhestellung R in einer entgegengesetzt zum Uhrzeigersinn verlaufenden Schwenkrichtung 54 um einen Winkel von mehr als 180° erfolgt und in umgekehrter Weise eine Schwenkbewegung von der Ruhestellung R in die Arbeitsstellung A im Uhrzeigersinn erfolgt.

Die Schwenkachse 52 verläuft dabei, wie in Fig. 2 und 3 dargestellt, schräg zur Längsmittelebene 38 und vorzugsweise auch schräg zu einer horizontalen Ebene 58, und zwar gegenüber der horizontalen Ebene 58 entgegengesetzt zu einer Fahrtrichtung fallend. Somit taucht der Kugelhals 32 beim Verschwenken zwischen der Arbeitsstellung A und der Ruhestellung R jeweils unter der Unterkante 22 des Stoßfängers 16 hindurch.

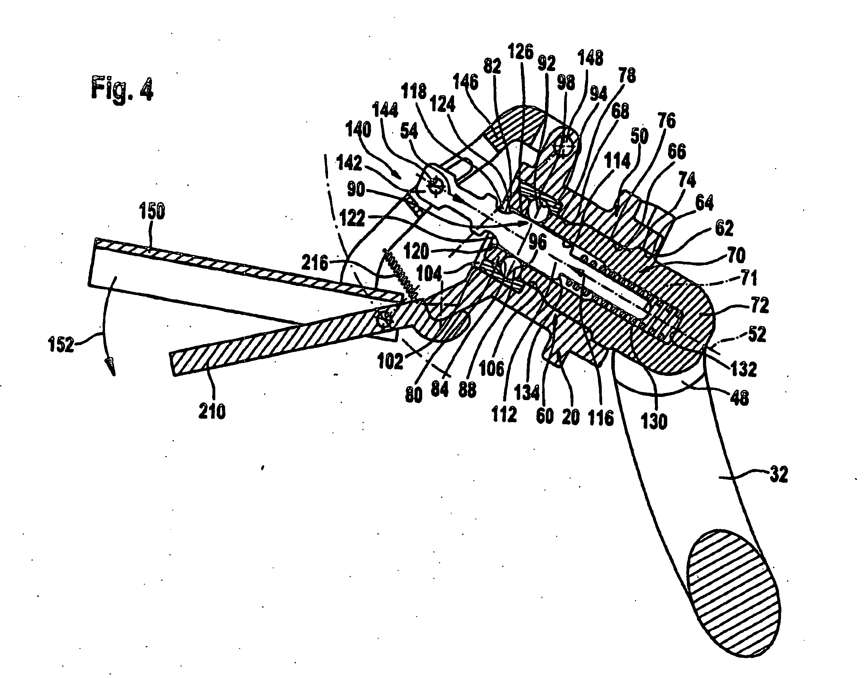

Wie in Fig. 4 dargestellt, ist das Schwenklager 50 gebildet durch einen vom Lagerelement 20 umfaßten Aufnahmekörper, welcher von einer dem Kugelhals 32 zugewandten Öffnung 62 ausgehend eine erste zur Schwenkachse 52 zylindrische Aufnahmefläche 64 und eine auf einer der Öffnung 62 abgewandten Seite der ersten zylindrischen Aufnahmefläche 64 angeordnete zweite zylindrische Aufnahmefläche 66 aufweist, die einen geringeren Durchmesser aufweist als die erste zylindrische Aufnahmefläche, und welcher in Fortsetzung der zweiten zylindrischen Aufnahmefläche 66 eine dritte zylindrische Aufnahmefläche 68 mit ebenfalls gegenüber der zweiten zylindrischen Aufnahmefläche 66 reduzierten Durchmesser aufweist, die auf einer der ersten zylindrischen Aufnahmefläche 64 gegenüberliegenden Seite der zweiten zylindrischen Aufnahmefläche 66 angeordnet ist.

In dem Aufnahmekörper 60 sitzt ein als Ganzes mit 70 bezeichneter Lagerkörper, welcher in einer in Fig. 4 dargestellten Fixierstellung mit einer ersten zu dessen Längsachse 71 und damit auch zur Schwenkachse 52 zylindrischen Mantelfläche 74 an der ersten zylindrischen Aufnahmefläche 64 anliegt, welcher mit einer zweiten zur Schwenkachse 52 zylindrischen Mantelfläche 76 an der zweiten zylindrischen Aufnahmefläche 66 anliegt und welcher mit einer dritten zylindrischen Mantelfläche 78 an der dritten zylindrischen Aufnahmefläche 68 anliegt.

Der Lagerkörper 70 setzt sich ferner noch über die dritte zylindrische Mantelfläche 78 hinaus fort mit einem Führungsabschnitt 80, welcher sich bis zu einem dem ersten Ende 72 des Lagerkörpers 70 gegenüberliegenden zweiten Ende 82 des Lagerkörpers 70 erstreckt.

In dem Führungsabschnitt 80 sind in quer zur Schwenkachse 52 verlaufenden Führungsöffnungen 84 Sperrkörper 88 einer als Ganzes mit 90 bezeichneten Blockiereinrichtung angeordnet, die in einer Bewegungsrichtung 92 quer zur Schwenkachse 52 bewegbar sind und zwar so, daß mit diesen in einem Einsatzkörper 94 des Lagerelements 20 vorgesehene und durch eine um die Schwenkachse 52 umlaufende Nut 96 gebildete Sperrflächen 98 hintergreifbar sind, welche schräg zur Bewegungsrichtung 92 verlaufen.

Dabei ist der Einsatzkörper 94 derart in dem Lagerelement 20 angeordnet, daß dieser sich an den Aufnahmekörper 60 anschließt und vorzugsweise in einer Ausnehmung 102 sitzt, die sich von einer der Öffnung 62 gegenüberliegenden Öffnung 104 des Lagerelements 20 in dieses hineinerstreckt, so daß der Einsatzkörper 94 konzentrisch zur Schwenkachse 52 im Lagerelement 20 gehalten ist und mit einer sich an die Nut 96 anschließenden zylindrischen Innenfläche 106 fluchtend mit der dritten zylindrischen Aufnahmefläche 68 bis zu einer Öffnung 108 verläuft.

Zum Bewegen der Sperrkörper 88 in der Bewegungsrichtung 92 ist ein als Ganzes mit 110 bezeichneter Sperrkörperantrieb vorgesehen, welcher ein Antriebselement 112 aufweist, das in einer sich ausgehend von einer an dem Ende 82 vorgesehenen Öffnung 118 in den Lagerkörper 70 hineinerstreckenden und bis zum ersten Ende 72 verlaufenden, vorzugsweise zur Schwenkachse 52 koaxialen Aufnahmebohrung 114 angeordnet ist und in dieser relativ zum Lagerkörper 70 in einer Aktivierungsrichtung 116 verschiebbar ist.

Das Antriebselement 112 weist zum Verschieben der Sperrkörper 88 eine Antriebskulisse 120 auf, die eine Aufnahme 122 für die Sperrkörper 88, eine sich an die Aufnahme 122 anschließende Verschiebefläche 124 für die Sperrkörper 88 und eine sich an die Verschiebefläche 124 anschließende Keilfläche 126 für die Sperrkörper 88 umfaßt.

Das Antriebselement 112 des Sperrkörperantriebs ist ferner noch mit einem Führungsstift 128 versehen, welcher in ein Inneres eines elastischen Kraftspeichers 130 eingreift, der sich auf einem Boden 132 der Aufnahmebohrung 114 einerseits abstützt und andererseits das Antriebselement 112 im Bereich eines Ringflansches 134 mit einer Kraft derart beaufschlagt, daß das Antriebselement 112 stets die Tendenz hat, sich so weit in Richtung einer aktiven Stellung zu verschieben, daß die Antriebskulisse 120 mit der Keilfläche 126 die in Sperrstellung stehenden Sperrkörper 88 beaufschlagt und somit die Sperrkörper 88 stets mit einer Kraft gegen die Sperrflächen 98 wirken, wie dies in Fig. 4 dargestellt ist, so daß der Lagerkörper 70 auch in der Fixierstellung möglichst weit in den Aufnahmekörper 60 eingezogen wird.

Um dem elastischen Kraftspeicher 130 entgegenzuwirken, umfaßt die Blockiereinrichtung 90 eine als Ganzes mit 140 bezeichnete Betätigungseinrichtung, welche ein einstückig an das Antriebselement 112 angeformtes Betätigungselement 142 aufweist, welches sich koaxial zur Schwenkachse 52 in Fortsetzung des Antriebselements 112 durch die Öffnung 118 und über das zweite Ende 82 des Lagerkörpers 70 hinauserstreckt und über ein Gelenk 144 mit einem Führungshebel 146 verbunden ist, welcher auf einer Seite des Lagerelements 20 mit einem Schwenkgelenk 148 gelagert ist und sich ausgehend von dem Schwenkgelenk 148 über die Öffnung 108 des Lagerelements 20 hinwegerstreckt und auf seiner dem Schwenkgelenk 148 gegenüberliegenden Seite einen Betätigungshebel 150 trägt.

Durch Beaufschlagen des Betätigungshebels 150 in einer Zugrichtung 152 bewegt sich der Führungshebel 146 in Richtung der Öffnung 108 und somit erfolgt eine Einwirkung auf das Betätigungselement 142 in einer Betätigungsrichtung 144, in welcher das Betätigungselement 142 das Antriebselement 112 des Sperrkörperantriebs 110 entgegen der Wirkung des elastischen Kraftspeichers 130 in die Aufnahmebohrung 114 einschiebt.

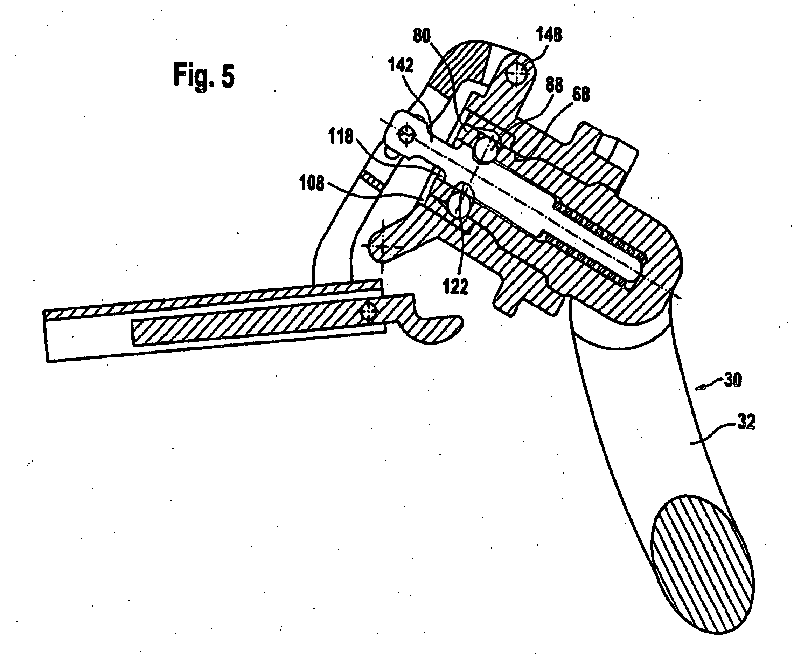

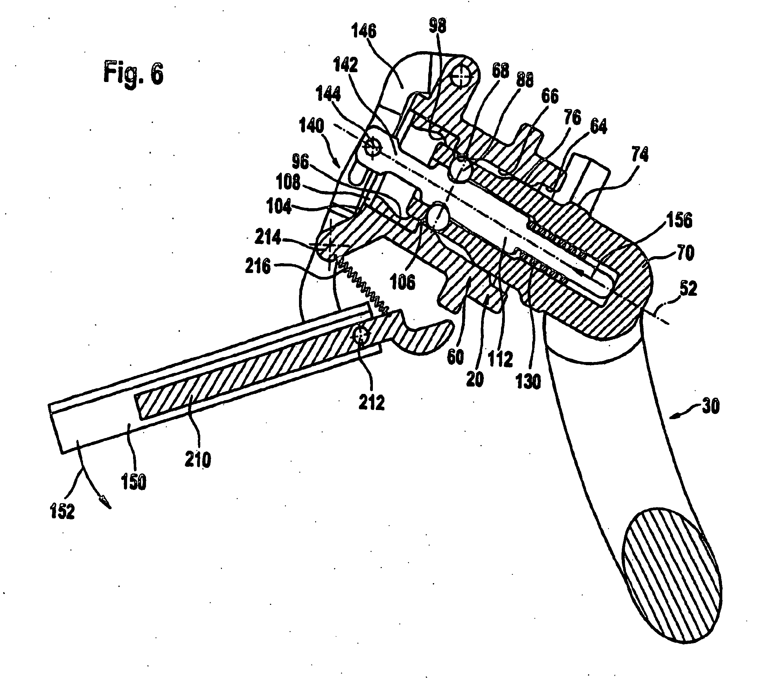

Damit beaufschlagt die Antriebskulisse 120 die Sperrkörper 88 nicht mehr mit den Keilflächen 126 sondern zunächst mit den Verschiebeflächen 124 und wird dann weiter eingeschoben, bis, wie in Fig. 5 dargestellt, die Sperrkörper 88 in die Aufnahme 122 eintauchen können und sich somit aus ihrer Sperrstellung heraus in ihre Freigabestellung bewegen können, in welcher die Sperrkörper 88 nicht mehr über die Außenseite des Führungsabschnitts 80 überstehen, so daß der Führungsabschnitt 80 in Richtung der dritten zylindrischen Aufnahmefläche 68 verschiebbar ist, wie in Fig. 6 dargestellt.

In dieser Stellung ist der gesamte Lagerkörper 70 in eine Schwenkstellung verschoben, in welcher das gesamte Anhängeelement 30 um die Schwenkachse 52 frei drehbar ist.

Die freie Drehbarkeit des Anhängeelements 30 in der in Fig. 6 dargestellten Schwenkstellung resultiert daraus, daß in der in Fig. 6 dargestellten Schwenkstellung der gesamte Lagerkörper 70 in Richtung seiner Längsachse 71 und somit auch zur Schwenkachse 52 entgegengesetzt zu einer Verschieberichtung 156 durch die Einwirkung der Betätigungseinrichtung 140 verschoben wurde, wobei in der Schwenkstellung beispielsweise der Führungshebel 146 auf einem Anschlag des Lagerelements 20, beispielsweise einer Stirnseite derselben, aufliegt.

Durch das Verschieben des Lagerkörpers 70 entgegengesetzt zur Verschieberichtung 156 ist beispielsweise die erste zylindrische Mantelfläche 74 so weit verschoben, daß diese in Richtung der Längsachse 71 versetzt gegenüber der ersten zylindrischen Aufnahmefläche 64 angeordnet ist.

Lediglich die zweite zylindrische Mantelfläche 76 liegt noch in Teilbereichen an Teilbereichen der zweiten zylindrischen Aufnahmefläche 66 an.

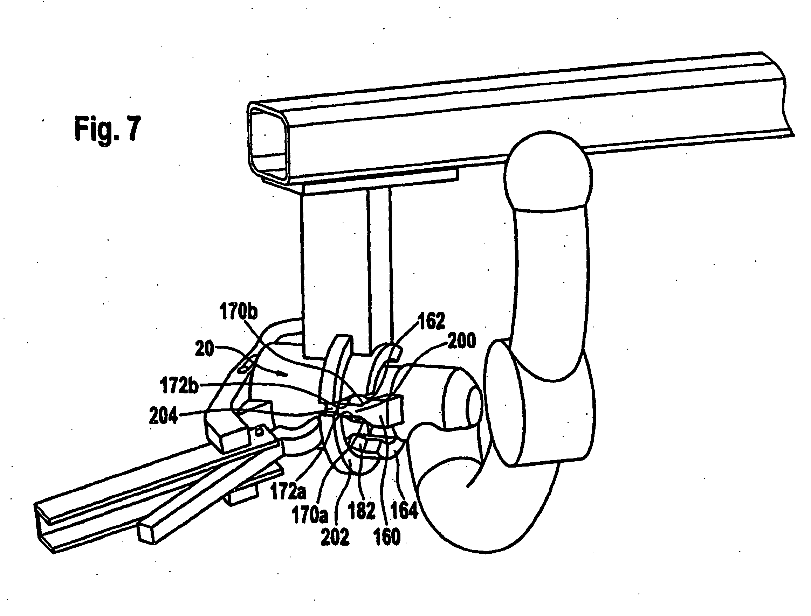

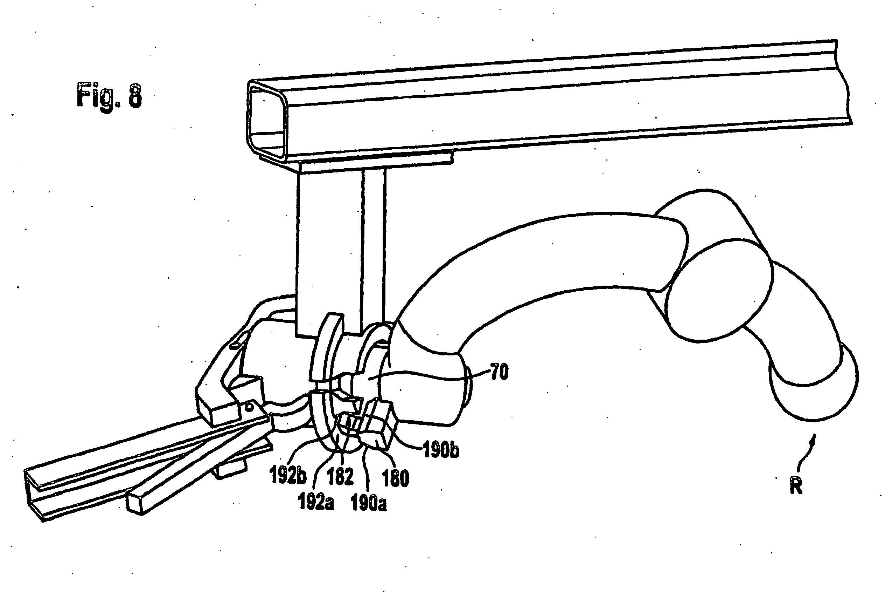

Darüber hinaus ist durch das Verschieben des Lagerkörpers 70 entgegengesetzt zur Verschieberichtung 156 ein in Fig. 2 und 7 dargestelltes erstes Formschlußelement in Form eines Formschlußkörpers 160 aus einer ein zweites Formschlußelement darstellenden arbeitsstellungsseitigen Formschlußaufnahme 162 in dem Aufnahmekörper 60 herausbewegt und somit gegenüber einer Stirnseite 164 des Aufnahmekörpers 60 frei um die Schwenkachse 52 verschwenkbar, und zwar, wie in Fig. 8 dargestellt, in die Ruhestellung R, in welcher der Formschlußkörper 160 wieder ein drittes Formschlußelement in Form einer ruhestellungsseitigen, nicht erkennbaren Formschlußaufnahme gegenübersteht und dadurch mit dieser in Eingriff bringbar ist, daß der Lagerkörper 70 wiederum in der Verschieberichtung 156 in die Fixierstellung bewegt wird.

Vorzugsweise weist dabei der Formschlußkörper 160 zwei keilförmig zueinander verlaufende Formschlußflächen 170a, 170b auf, welche an korrespondierende Formschlußflächen 162a, 162b der arbeitsstellungsseitigen Formschlußaufnahme 162 anlegbar sind, so daß dadurch bei Beaufschlagung des Formschlußkörpers 160 in Verschieberichtung 156 in Richtung der Fixierstellung die ersten Formschlußflächen 170a, 170b sich an den Formschlußflächen 172a, 172b der arbeitsstellungsseitigen Formschlußaufnahme 162 spielfrei anlegen lassen.

Ferner ist, wie in Fig. 8 dargestellt, dem Formschlußkörper 160 gegenüberliegend ein weiteres erstes Formschlußelement in Form eines weiteren Formschlußkörpers 180 vorgesehen, welcher aufgrund der perspektivischen Darstellung nur in der Ruhestellung R erkennbar ist.

Dieser weitere Formschlußkörper 180 ist im Prinzip gleich ausgebildet wie der Formschlußkörper 160 und, wie in Fig. 8 dargestellt, in der Ruhestellung R in ein weiteres drittes Formschlußelement in Form einer ruhestellungsseitigen Formschlußaufnahme 182 einführbar. Auch der weitere Formschlußkörper 180 hat Formschlußflächen 190a, 190b, welche mit Formschlußflächen 192a, 192b der ruhestellungsseitigen Formschlußaufnahme 182 bei Verschiebung desselben von der Schwenkstellung in die Fixierstellung in Eingriff bringbar sind.

Da die Schwenkbewegung um die Schwenkachse 52 von der Arbeitsstellung in die Ruhestellung eine Drehbewegung insbesondere um ungefähr 180° und mehr umfaßt und zwei gegenüberliegende Formschlußkörper 160 und 180 vorgesehen sind, ist zusätzlich, um zu verhindern, daß der erste Formschlußkörper 160 in beispielsweise die weitere ruhestellungsseitige Formschlußaufnahme 182 einrastet, der erste Formschlußkörper 160 noch mit einem Führungsstift 200 versehen, dem eine am Lagerelement 20 vorgesehene Führungsbahn 202 zugeordnet ist, welche lediglich in der Arbeitsstellung A und - zeichnerisch nicht dargestellt - in der Ruhestellung R eine Ausnehmung 204 aufweist, in welche der Führungsstift 200 eintauchen kann.

Somit ist durch den Führungsstift 200, der auf der Führungsbahn 202 sich außerhalb der Arbeitsstellung A und der Ruhestellung R abstützen kann, sichergestellt, daß der erste Formschlußkörper 160 sich nur in der Arbeitsstellung A in der Ruhestellung R in der Verschieberichtung 156 von der Schwenkstellung in die Fixierstellung bewegen kann und somit nur in die für diesen vorgesehenen arbeitsstellungsseitige Formschlußaufnahme und die ruhestellungsseitige Aufnahme eintreten kann.

Der Führungsstift 200 und die Führungsbahn 202 verhindern somit, daß sich der Lagerkörper 70 in allen Zwischenstellungen zwischen der Arbeitsstellung A und der Ruhestellung R von der Schwenkstellung in die Fixierstellung bewegen kann.

Dadurch wird auch die in Fig. 6 dargestellte inaktive Stellung des Antriebselements 112 des Sperrkörperantriebs 110 aufrecht erhalten, da die in der Freigabestellung stehenden Sperrkörper 88 eine Relativbewegung des Antriebselements 112 gegenüber dem Lagerkörper 70 in der Aktivierungsrichtung 116 verhindern, denn die Sperrkörper 88 stützen sich in dieser Stellung an der dritten zylindrischen Aufnahmefläche 68 des Aufnahmekörpers 60 ab.

Da außerdem das Betätigungselement 142 koaxial zur Schwenkachse 52 angeordnet ist und auch das Antriebselement 112 koaxial zur Schwenkachse 52 angeordnet ist, kann sich der Lagerkörper 70 um die Schwenkachse 52 drehen, während das Betätigungselement 142 und das Antriebselement 112 durch den Führungshebel 146 drehfest zur Schwenkachse 52 gehalten werden und somit die Drehung nicht mitmachen, sondern drehfest verharren, während sich der Lagerkörper 70 mit den Sperrkörpern 88 um das Antriebselement 112 herum dreht.

Erreicht das Anhängeelement 30 durch Drehen um die Schwenkachse 52 die Arbeitsstellung A oder die Ruhestellung R so hat der Führungsstift 200 die Möglichkeit, in die Ausnehmung 204 einzutauchen, sofern das Anhängeelement 30 entgegengesetzt zur Verschieberichtung 156 manuell beaufschlagt wird.

Erfolgt die Verschiebung soweit, bis die Sperrkörper 88 wieder die Möglichkeit haben, sich radial nach außen in die Nut 96 hineinzubewegen, so hat gleichzeitig das durch den elastischen Kraftspeicher 130 beaufschlagte Antriebselement 112 die Möglichkeit, die Antriebskulisse 120 soweit zu verschieben, daß die Verschiebefläche 124 die Sperrkörper 88 von ihrer Freigabestellung in der Bewegungsrichtung 92 zur Sperrstellung hin bewegt und ferner kann sich das Antriebselement 112 soweit verschieben, daß nach Erreichen der Sperrstellung der Sperrkörper 88 die Antriebskulisse 120 relativ zu diesen soweit verschoben ist, daß die Keilflächen 126 auf die Sperrkörper 88 wirken.

Dadurch, daß nun die Sperrflächen 98 schräg zur Bewegungsrichtung 92 dergestalt verlaufen, daß die sich in der Bewegungsrichtung 92 bewegenden Sperrkörper 88 über ihre Führungsöffnungen 84 so auf den Lagerkörper 70 einwirken, daß dieser eine Kraft entgegengesetzt zur Verschieberichtung 156 in Richtung der Fixierstellung erfährt, bewirkt diese Kraft auch, daß die keilförmig zueinander verlaufenden Formschlußflächen 170a, 170b sowie 172a, 172b sowie die Formschlußflächen 190a und 190b sowie 192a und 192b kraftbeaufschlagt aneinander anliegen und somit spielfrei relativ zueinander gehalten werden, woraus wiederum eine spielfreie und drehfeste Positionierung des Anhängeelements 30 relativ zum Lagerelement 20 resultiert.

Außerdem ist zur Sicherung der Fixierstellung des Betätigungshebels 150 diesem noch ein Rasthebel 210 zugeordnet, welcher um ein Gelenk 212 drehbar ist und in der Fixierstellung des Lagerkörpers und somit in einer Aktivierungsstellung des Antriebselements 112 und entsprechender Stellung des Führungshebels 146 sich auf einer am Lagerelement 20 vorgesehenen Nase 214 abstützt.

Um die Stellung des Rasthebels 210, in welcher sich dieser auf der Nase 214 abstützt, aufrecht zu erhalten, ist dieser noch durch eine Feder 216 in Richtung seiner Stützstellung beaufschlagt, so daß ein Bewegen es Betätigungshebels 150 in der Zugrichtung 152 nur dann möglich ist, wenn vorher der Rasthebel 210 von seiner Abstützstellung auf der Nase 214 entgegengesetzt zu der Wirkung der Feder 216 gelöst wird.

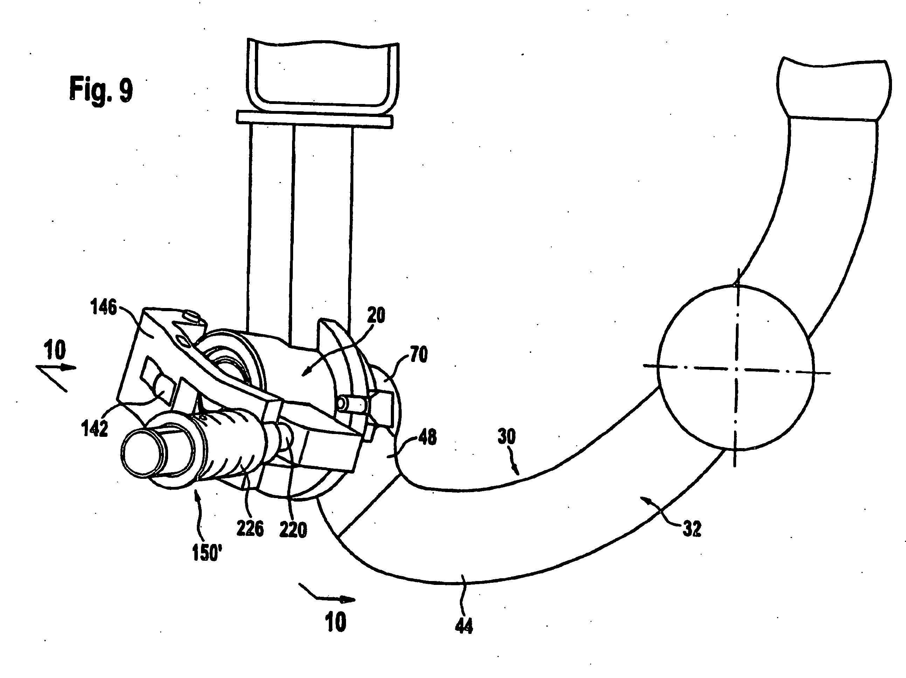

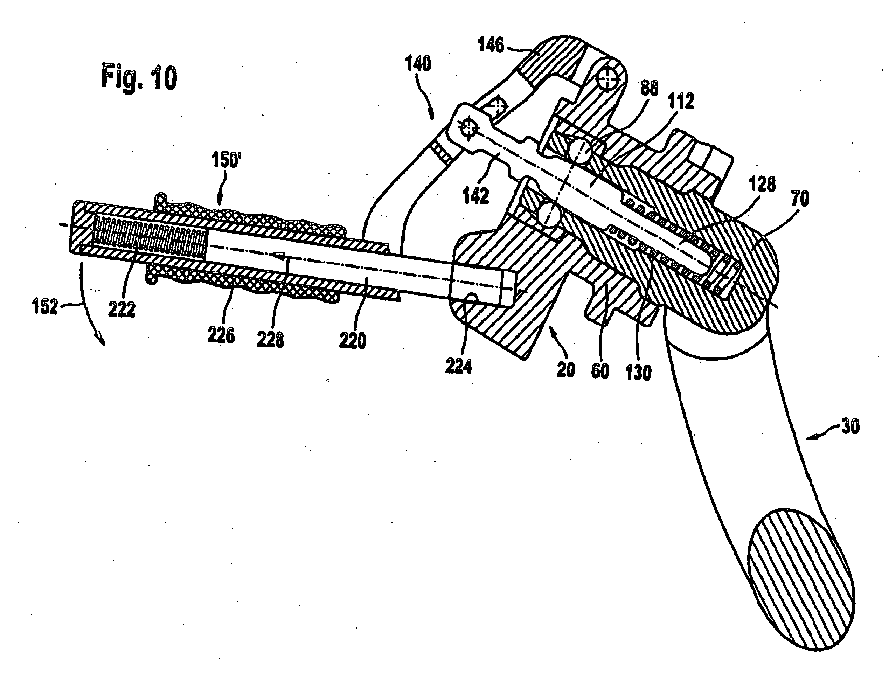

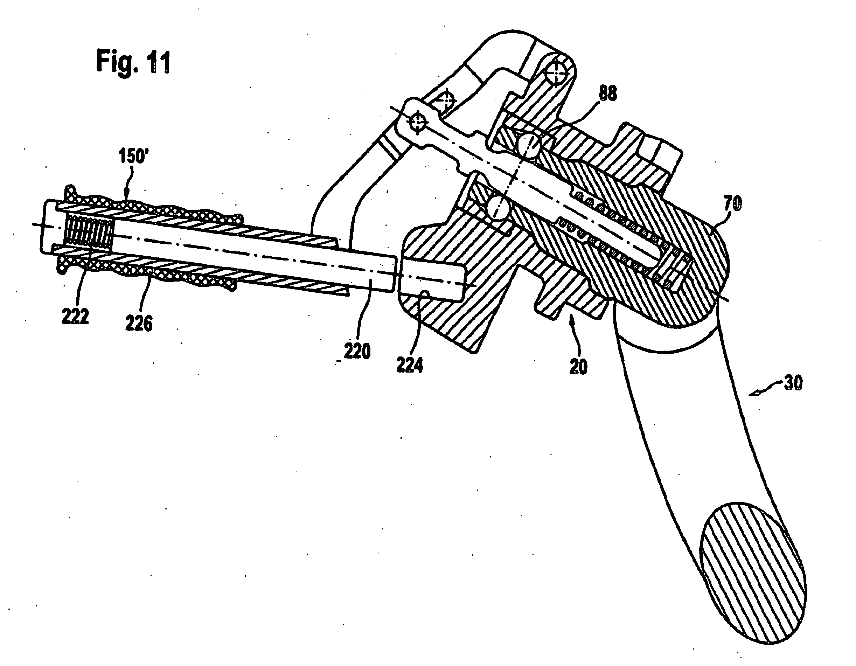

Bei einem zweiten Ausführungsbeispiel, dargestellt in Fig. 9 bis 12 sind diejenigen Elemente, die mit denen des ersten Ausführungsbeispiels identisch sind, mit denselben Bezugszeichen versehen, so daß hinsichtlich der Beschreibung derselben vollinhaltlich auf die Ausführungen zum ersten Ausführungsbeispiel Bezug genommen werden kann.

Im Gegensatz zum ersten Ausführungsbeispiel ist anstelle des Rasthebels 210 an dem Betätigungshebel 150' ein Rastbolzen 220 vorgesehen, welcher durch eine Druckfeder 222 in Richtung einer im Lagerelement 20 vorgesehenen Bolzenaufnahme 224 verschiebbar ist und in der Fixierstellung auch in diese eingreift. Zum Lösen des Rastbolzens 220 aus der Rastbolzenaufnahme 224 ist ein Griffelement 226 vorgesehen, mit welchem auf den Rastbolzen 220 dergestalt eingewirkt werden kann, daß dieser in einer Löserichtung 228 relativ zum Betätigungshebel 150' soweit verschiebbar ist, daß dieser die Bolzenaufnahme 224 verläßt und somit der Betätigungshebel 150' in bereits beschriebener Weise in der Zugrichtung 152 verschwenkbar ist, um mittels des Betätigungselements 142 das Antriebselement 112 in der Betätigungsrichtung 154 entgegengesetzt zur Kraftwirkung des elastischen Kraftspeichers 130 in seine inaktive Stellung zu bewegen und gleichzeitig den Lagerkörper 70 relativ zum Aufnahmekörper 60 von der Fixierstellung in die Schwenkstellung zu bewegen, in welcher ein Verschwenken desselben in gleicher Weise wie im Zusammenhang mit dem ersten Ausführungsbeispiel beschrieben, möglich ist.

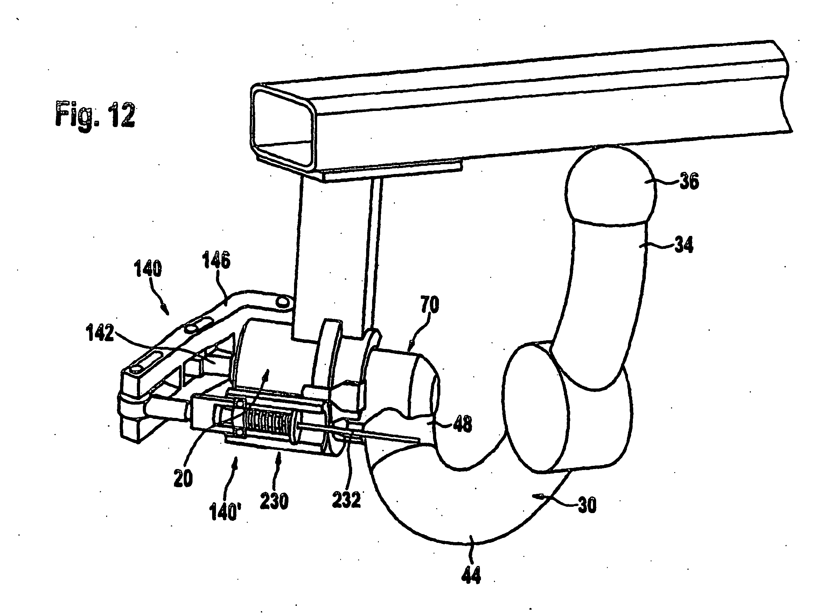

Bei einem dritten Ausführungsbeispiel, dargestellt in Fig. 12, ist die Betätigungseinrichtung 140', insbesondere der Führungshebel 146 nicht direkt durch den Betätigungshebel 150 betätigbar, sondern über eine Seilzugvorrichtung 230, welche die Möglichkeit schafft, über einen Seilzug 232 die Kraft an einen von einem geeigneten Ort vorgesehenen Betätigungshebel zu übertragen.

Im übrigen ist das dritte Ausführungsbeispiel in gleicher Weise ausgebildet wie das erste Ausführungsbeispiel, so daß bezüglich der übrigen Elemente vollinhaltlich auf die Ausführungen zum ersten Ausführungsbeispiel Bezug genommen wird und auch dieselben Teile mit denselben Bezugszeichen versehen sind.

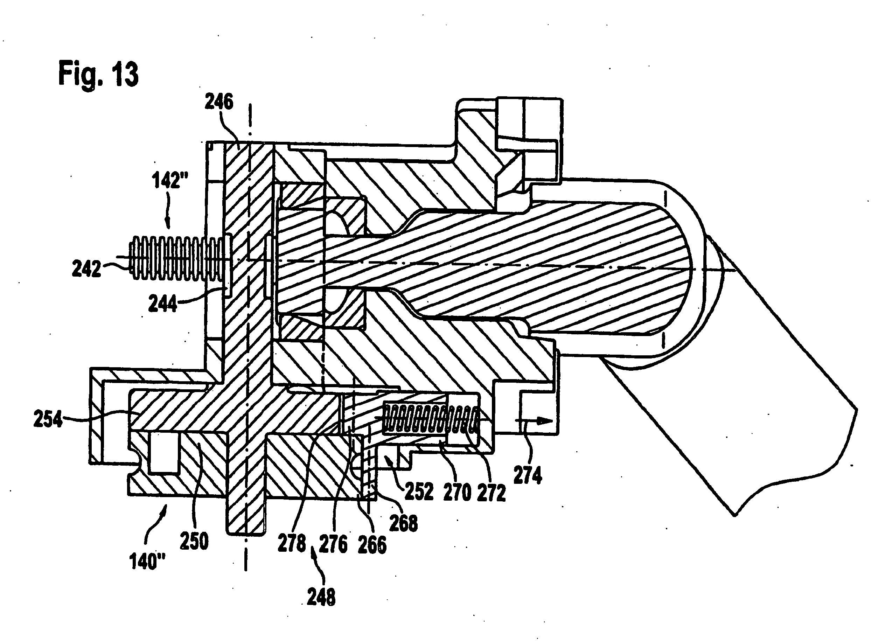

Bei einem vierten Ausführungsbeispiel, dargestellt in den Fig. 13 bis 16, sind diejenigen Elemente, die mit denen des ersten Ausführungsbeispiels identisch sind, ebenfalls mit denselben Bezugszeichen versehen, so daß hinsichtlich der Beschreibung derselben vollinhaltlich auf die Ausführungen zum ersten Ausführungsbeispiel Bezug genommen werden kann.

Im Gegensatz zu den voranstehenden Ausführungsbeispielen ist beim vierten Ausführungsbeispiel die Betätigungseinrichtung 140" als Drehantrieb ausgebildet und umfaßt als Betätigungselement 142' eine Zahnstange 242, welche mit einem Zahnritzel 244 einer Antriebswelle 246 in Eingriff steht, wobei die Antriebswelle 246 durch einen Drehantrieb 248 mit einem Freilauf 250 sowie einer Rasteinrichtung 252 antreibbar ist.

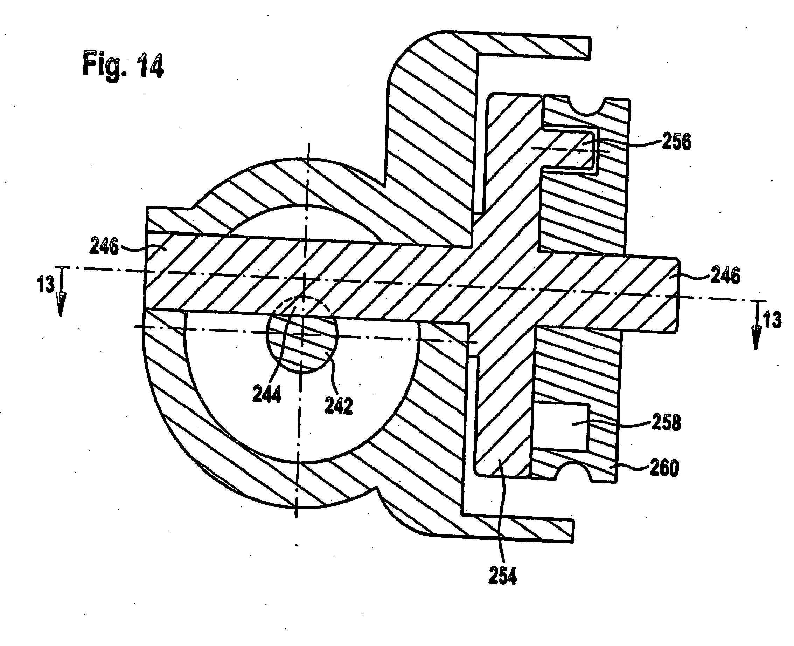

Der Freilauf 250 wird gebildet durch eine Freilaufscheibe 254, die, wie in Fig. 14 dargestellt, einen Mitnehmer 256 trägt, der in eine Mitnehmernut 258 einer Mitnehmerscheibe 260 eingreift, welche drehbar gegenüber der Freilaufscheibe 254 und drehbar auf der Antriebswelle 246 gelagert ist.

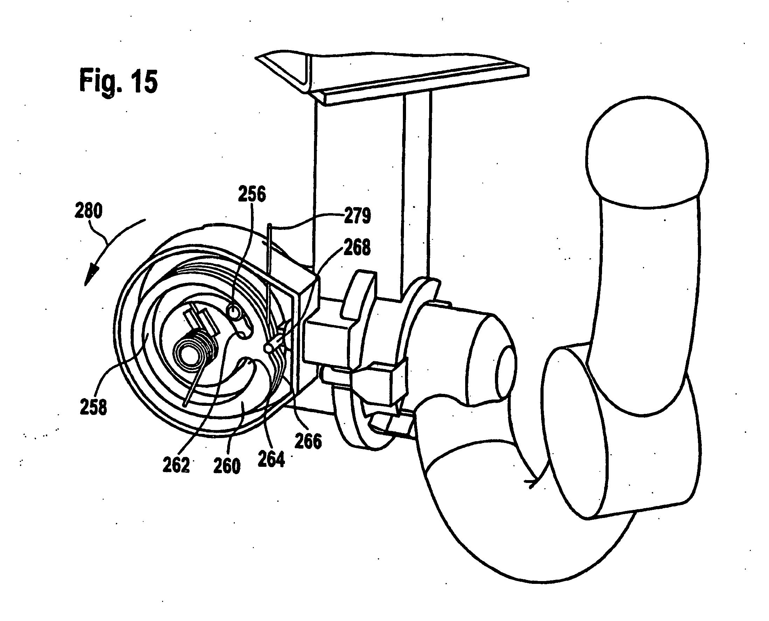

Die Mitnehmernut 258 weist dabei, wie in Fig. 15 dargestellt, ein erstes Ende 262 und ein zweites Ende 264 auf, zwischen welchen sich der Mitnehmer 256 frei in der Mitnehmernut 258 bewegen kann.

Ferner ist die Mitnehmerscheibe 260 an ihrer Außenumfangsseite mit einer Steuerkulisse 266 versehen, mit welcher ein Steuerstift 268 eines Rastkörpers 270 der Rasteinrichtung 252 verschiebbar ist, und zwar dahingehend, daß der Rastkörper 270 entgegen der Kraftwirkung einer Feder 272 in einer Ausrastrichtung 274 bewegbar ist.

Der Rastkörper 270 weist ferner eine Rastnase 276 auf, welche mit einer Rastausnehmung 278 in der Freilaufscheibe 254 dann in Eingriff bringbar ist, wenn die drehfest mit der Antriebswelle 246 gekoppelte Freilaufscheibe 254 in einer der aktiven Stellung des Antriebselements 112 entsprechenden Stellung steht. In dieser Stellung wird durch die Rastnase 276 des Rastkörpers 270 die Drehbewegung der Freilaufscheibe 254 blockiert und somit auch das Betätigungselement 142' gegen eine Bewegung in der Betätigungsrichtung 154 gesichert.

Soll nun ein Verschieben des Antriebselements 112 von seiner aktiven Stellung in seine inaktive Stellung erfolgen, so erfolgt beispielsweise mittels eines Seilzuges 279 ein Drehen der Mitnehmerscheibe 260.

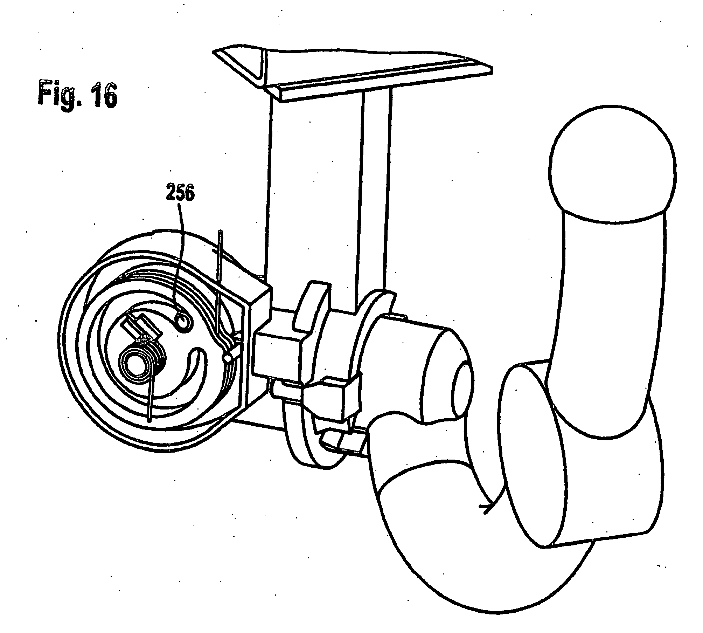

Da der Mitnehmer 256 in der durch den Rastkörper 270 fixierten Stellung der Freilaufscheibe 254 im Abstand von dem ersten Ende 262 der Mitnehmernut 258 steht (Fig. 15), kann die Mitnehmerscheibe 260 zunächst so lange in einer Drehrichtung 280 gedreht werden, bis der Mitnehmer 256 an dem Ende 262 der Mitnehmernut 258 anliegt (Fig. 16). Dieser Weg ist ausreichend um mittels der Steuerkulisse 266 auf den Steuerstift 268 des Rastkörpers 270 einzuwirken und somit den Rastkörper 270 entgegen der Kraftwirkung der Feder 272 in Ausrastrichtung 274 zu bewegen und folglich die Drehbewegung der Freilaufscheibe 254 frei zu geben.

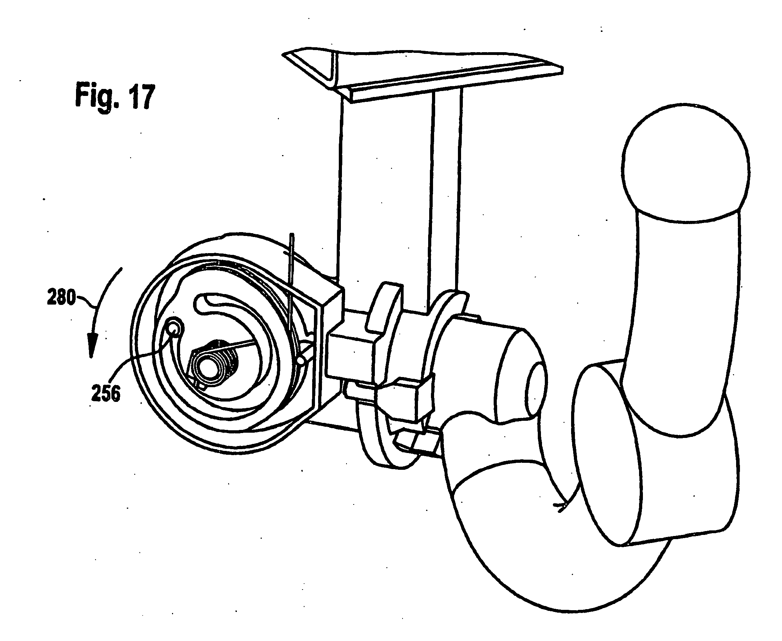

Die Freilaufscheibe 254 wird dadurch mitgenommen, daß der Mitnehmer 256 an dem Ende 262 der Mitnehmernut 258 anliegt und mit der Mitnehmerscheibe 260 weitergedreht wird, wie in Fig. 16 und 17 dargestellt.

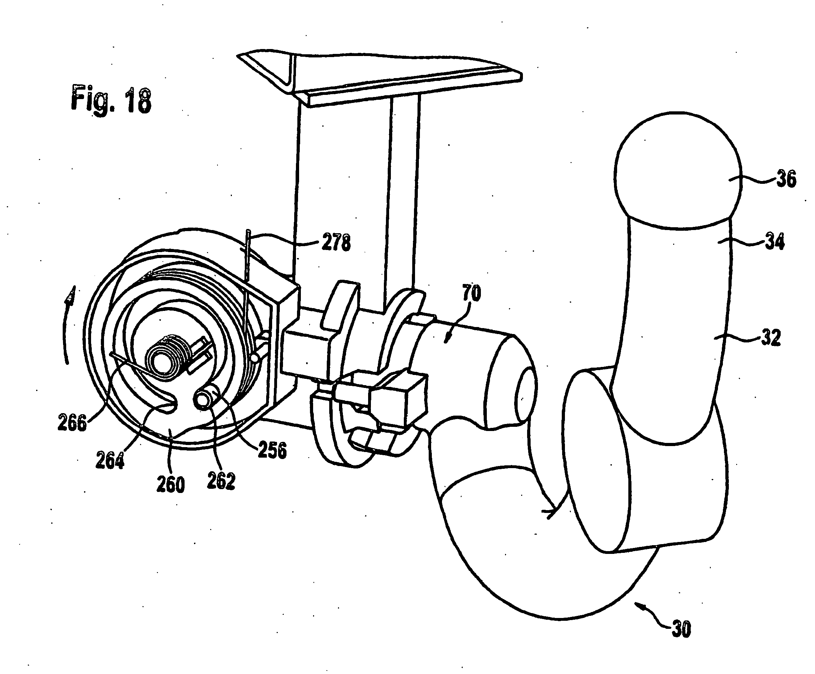

Dadurch erfolgt auch eine entsprechende Drehung der Antriebswelle 246 und somit über das Ritzel 244 ein Einwirken auf die Zahnstange 242 im Sinne einer Verschiebung des Betätigungselements 142' in der Betätigungsrichtung 154 so lange, bis die Schwenkstellung des Anhängeelements 30 erreicht ist, wie in Fig. 18 dargestellt.

In der inaktiven Stellung des Antriebselements 112 kann nun die Zugwirkung auf den Seilzug 278 entfallen und die Mitnehmerscheibe 260 hat die Möglichkeit, beaufschlagt durch eine Drehfeder 282 entgegengesetzt zur Drehrichtung 280 in ihre Ausgangsstellung zurückzudrehen, während die Freilaufscheibe 254 mit dem Mitnehmer 256 in einer der inaktiven Stellung des Antriebselements 112 und der Schwenkstellung des Anhängeelements 30 entsprechenden Stellung verharren kann, so lange bis das Anhängeelement 30 entweder in der Arbeitsstellung A oder der Ruhestellung R wieder in der Verschieberichtung 156 in die Fixierstellung verschoben wird und das Antriebselement 112 in der Fixierstellung in seine aktive Stellung übergeht. Hierbei kann dann der Mitnehmer 256 sich frei in die in Fig. 15 dargestellte Stellung zurückbewegen und es erfolgt wieder ein drehfestes Verrasten der Freilaufscheibe 254 dadurch, daß die Rastnase 276 des Rastkörpers 270 in die Rastausnehmung 278 eintaucht.

## Patentansprüche

1. Anhängekupplung für Kraftfahrzeuge umfassend
ein Lagerelement (20),
ein gegenüber dem Lagerelement (20) zwischen einer Arbeitsstellung (A) und einer Ruhestellung (R) um eine Schwenkachse (52) eines Schwenklagers (50) verschwenkbares und zumindest in der Arbeitsstellung (A) zwischen einer Schwenkstellung und einer Fixierstellung in Richtung der Schwenkachse (52) verschiebbares Anhängeelement (30) und eine Fixiereinrichtung, mit weicher das Anhängeelement (30) zumindest in der Arbeitsstellung (A) und bei Erreichen der Fixierstellung unbewegbar am Lagerelement (20) fixierbar ist,
wobei das Anhängeelement (30) einen Lagerkörper (70) aufweist, wobei das Lagerelement (20) einen Aufnahmekörper (60) aufweist, in weichen der Lagerkörper (70) zumindest in der Fixierstellung eingreift und gegenüber welchem der Lagerkörper (70) zwischen der Schwenkstellung und der Fixierstellung in einer Verschieberichtung (156) und umgekehrt bewegbar ist, wobei der Lagerkörper (70) das Anhängeelement (30) sowohl in der Schwenkstellung als auch in der Fixierstellung gegenüber dem Aufnahmekörper (60) lagert, wobei die Fixiereinrichtung eine den Lagerkörper (70) gegenüber einer Bewegung in der Verschieberichtung (156) relativ zum Aufnahmekörper (60) blockierende Blockiereinrichtung (90) aufweist, welche mindestens einen in dem Anhängeelement (30) angeordneten, von einer Freigabestellung kraftbeaufschlagt in Richtung einer Sperrstellung bewegbaren Sperrkörper (88) und mindestens eine an dem Lagerelement (20) angeordnete Sperrfläche (98) aufweist, welche der Sperrkörper (88) in der Sperrstellung hintergreift, wobei die Blockiereinrichtung (90) einen Sperrkörperantrieb (110) aufweist, mit welchem der Sperrkörper (88) mit einer diesen von der Freigabestellung in Richtung der Sperrstellung bewegenden Kraft beaufschlagbar ist, wobei die Blockiereinrichtung (90) eine auf den Sperrkörperantrieb (110) wirkende Betätigungseinrichtung (140) umfasst, mit weicher auf ein Antriebselement (112) entgegen der Kraftwirkung eines elastischen Kraftspeichers (130) einwirkbar ist, und wobei die Betätigungseinrichtung (140) am Lagerelement (20) angeordnet ist und der Sperrkörperantrieb (110) am Anhängeelement (30).

2. Anhängekupplung nach dem voranstehenden Ansprüche **dadurch gekennzeichnet, dass** das Anhängeelement (30) ein erstes die Kupplungskugel (36) tragendes Ende (34) sowie ein zweites freies Ende (82) aufweist.

3. Anhängekupplung nach Anspruch 2, **dadurch gekennzeichnet, dass** der Lagerkörper (70) an dem Anhängeelement (30) zwischen dem Kugelhals (32) und dem freien Ende (82) angeordnet ist.

4. Anhängekupplung nach einem der voranstehenden Ansprüche, **dadurch gekennzeichnet, dass** der Aufnahmekörper (60) eine erste Öffnung (62) aufweist, durch welche der Lagerkörper (70) ausgehend vom Kugelhals (32) in den Aufnahmekörper (60) eingreift, und eine zweite, der ersten Öffnung (62) gegenüberliegende Öffnung (104).

5. Anhängekupplung nach einem der voranstehenden Ansprüche, **dadurch gekennzeichnet, dass** der Sperrkörperantrieb (110) das Antriebselement. (112) aufweist, mit welchem der Sperrkörper (88) von der Freigabestellung in die Sperrstellung bewegbar ist.

6. Anhängekupplung nach Anspruch 5, **dadurch gekennzeichnet, dass** das Antriebselement (112) durch den elastischen Kraftspeicher (130) beaufschlagt ist.

7. Anhängekupplung nach einem der voranstehenden Ansprüche, **dadurch gekennzeichnet, dass** das Antriebselement (112) in einer Aktivierungsrichtung (116) relativ zu dem dieses aufnehmenden Element (70) verschiebbar angeordnet ist.

8. Anhängekupplung nach Anspruch 7, **dadurch gekennzeichnet, dass** das Antriebselement (112) eine Antriebskulisse (120) mit einer Aufnahme (122) aufweist, in welche der mindestens eine Sperrkörper (88) in der Freigabestellung eintaucht, und eine Verschiebefläche (124), mit weicher der mindestens eine Sperrkörper (88) von der Freigabestellung in die Sperrstellung bewegbar ist.

9. Anhängekupplung nach Anspruch 8, **dadurch gekennzeichnet, dass** sich an die Verschiebefläche (124) eine Keilfläche (126) anschließt, welche den Sperrkörper (88) in der Sperrstellung in der Bewegungsrichtung (92) nachstellend beaufschlagt.

10. Anhängekupplung nach einem der voranstehenden Ansprüche, **dadurch gekennzeichnet, dass** die Blockiereinrichtung (90) formschlüssige Fixierelemente (160, 162, 180, 182) der Fixiereinrichtung in spielfreier Anlage hält.

11. Anhängekupplung nach einem der voranstehenden Ansprüche, **dadurch gekennzeichnet, dass** die Blockiereinrichtung (90) auf die formschlüssigen Fixierelemente (160, 162, 180, 182) spielfrei nachstellend wirkt.

12. Anhängekupplung nach einem der voranstehenden Ansprüche, **dadurch gekennzeichnet, dass** die Blockiereinrichtung (90) in der Sperrstellung des mindestens einen Sperrkörpers (88) aufgrund dessen Zusammenwirken mit der Sperrfläche (98) den Lagerkörper (70) in Richtung der Fixierstellung kraftbeaufschlagt.

13. Anhängekupplung nach Anspruch 12, **dadurch gekennzeichnet, dass** die Sperrfläche (98) schräg zur Bewegungsrichtung (92) verläuft.

14. Anhängekupplung nach einem der voranstehenden Ansprüche, **dadurch gekennzeichnet, dass** der mindestens eine Sperrkörper (88) und der Sperrkörperantrieb (110) in dem Lagerkörper (70) angeordnet sind.

15. Anhängekupplung nach Anspruch 14, **dadurch gekennzeichnet, dass** in dem Lagerkörper (70) der mindestens eine Sperrkörper (88) zwischen der Freigabestellung und der Sperrstellung in einer Bewegungsrichtung (92) quer zur Verschieberichtung (156) desselben bewegbar geführt ist.

16. Anhängekupplung nach einem der voranstehenden Ansprüche, **dadurch gekennzeichnet, dass** ein Betätigungselement (142) der Betätigungseinrichtung (140) über das freie Ende (82) des Anhängeelements (30) übersteht.

17. Anhängekupplung nach Anspruch 16, **dadurch gekennzeichnet, dass** das Betätigungselement (142) koaxial zur Schwenkachse (52) angeordnet ist.

18. Anhängekupplung nach Anspruch 17, **dadurch gekennzeichnet, dass** das Betätigungselement (142) um die Schwenkachse (52) drehbar im Anhängeelement (30) gelagert ist.

19. Anhängekupplung nach Anspruch 18, **dadurch gekennzeichnet, dass** das Betätigungselement (142) zum Aufheben der auf das Antriebselement (112) wirkenden Kraft des elastischen Kraftspeichers (130) in seinem über das freie Ende (82) des Anhängeelements (30) überstehenden Bereich In Richtung des freien Endes (82) des Anhängeelements (30) beaufschlagbar ist.

20. Anhängekupplung nach einem der voranstehenden Ansprüche, **dadurch gekennzeichnet, dass** mit der Betätigungseinrichtung (140) bei in Freigabestellung stehendem Sperrkörper (88) das Anhängeelement (30) von der Fixierstellung in die Schwenkstellung verschiebbar ist.

21. Anhängekupplung nach Anspruch 20, **dadurch gekennzeichnet, dass** das Anhängeelement (30) in der Schwenkstellung mittels der Betätigungseinrichtung (140) in der Verschieberichtung (156) definiert positionierbar ist.

22. Anhängekupplung nach einem der voranstehenden Ansprüche, **dadurch gekennzeichnet, dass** das Betätigungselement (142) mit einem Führungshebel (146) der Betätigungseinrichtung (140) gekoppelt ist.

23. Anhängekupplung nach Anspruch 22, **dadurch gekennzeichnet, dass** der Führungshebel (146) an dem Lagerelement (20) schwenkbar gelagert ist.

24. Anhängekupplung nach einem der voranstehenden Ansprüche, **dadurch gekennzeichnet, dass** das Betätigungselement (142') als Zahnstange (242) ausgebildet ist, welche mit einem Zahnritzel (244) der Betätigungseinrichtung (140') kämmt.

25. Anhängekupplung nach einem der voranstehenden Ansprüche, **dadurch gekennzeichnet, dass** die Betätigungseinrichtung (140', 140") mit einem zwischen dem Betätigungselement (142) und einem Einwirkungselement (232, 279) vorgesehenen Freilauf (240, 250) versehen ist.

26. Anhängekupplung nach einem der voranstehenden Ansprüche, **dadurch gekennzeichnet, dass** der Aufnahmekörper (60) in der Schwenkstellung des Anhängeelements (30) den mindestens einen Sperrkörper (88) in der Freigabestellung hält.

27. Anhängekupplung nach Anspruch 26, **dadurch gekennzeichnet, dass** der Aufnahmekörper (60) eine auf den mindestens einen Sperrkörper (88) wirkende Fläche (68) aufweist.

28. Anhängekupplung nach einem der voranstehenden Ansprüche, **dadurch gekennzeichnet, dass** der mindestens eine Sperrkörper (88) auf einer dem Kugelhals (32) abgewandten Seite des Lagerkörpers (70) am Anhängeelement (30) vorgesehen ist.

29. Anhängekupplung nach Anspruch 28, **dadurch gekennzeichnet, dass** der mindestens eine Sperrkörper (88) in seitlichen Führungsöffnungen (84) des Anhängeelements (30) in der Bewegungsrichtung (92) angeordnet ist.

30. Anhängekupplung nach Anspruch 29, **dadurch gekennzeichnet, dass** die seitlichen Führungsöffnungen (84) nahe des freien Endes (82) des Anhängeelements (30) angeordnet sind.

31. Anhängekupplung nach einem der voranstehenden Ansprüche, **dadurch gekennzeichnet, dass** das Antriebselement (112) In einer Ausnehmung (114) im Anhängeelement (30) angeordnet ist.

32. Anhängekupplung nach Anspruch 31, **dadurch gekennzeichnet, dass** die Ausnehmung (114) sich von einer am freien Ende (82) des Anhängeelements (30) vorgesehenen Öffnung (118) in das Anhängeelement (30) hineinerstreckt.

33. Anhängekupplung nach Anspruch 31 oder 32, **dadurch gekennzeichnet, dass** die Ausnehmung (114) koaxial zur Schwenkachse (52) verläuft.

34. Anhängekupplung nach einem der Ansprüche 31 bis 33, **dadurch gekennzeichnet, dass** sich der federelastische Kraftspeicher (130) auf einem der Öffnung (118) gegenüberliegenden Boden (132) der Ausnehmung (114) abstützt.

35. Anhängekupplung nach einem der voranstehenden Ansprüche, **dadurch gekennzeichnet, dass** das Lagerelement (20) einen Aufnahmekörper (60) mit einer Öffnung (62) aufweist, von welcher ausgehend ein Lagerkörper (70) des Anhängeelements (30) in den Aufnahmekörper (60) eingreift, und dass das Anhängeelement (30) ein erstes Formschlusselement (160) aufweist, welches in der Schwenkstellung des Anhängeelements (30) außer Eingriff mit einem zweiten, am Aufnahmekörper (60) vorgesehenen Formschlusselement (162) steht und welches zumindest in der Arbeitsstellung (A) beim Verschieben des Anhängeelements (30) von der Schwenkstellung in die Fixierstellung mit dem zweiten Formschlusselement (162) am Endbereich des Aufnahmekörpers (60) in Eingriff bringbar ist.

36. Anhängekupplung nach Anspruch 35, **dadurch gekennzeichnet, dass** das zweite Formschlusselement (162) auf einer dem Kugelhals (32) zugewandten Seite des Aufnahmekörpers (60) angeordnet ist.

37. Anhängekupplung nach einem der Ansprüche 35 bis 36, **dadurch gekennzeichnet, dass** das zweite Formschlusselement (162) in einem stirnseitigen Bereich des Aufnahmekörpers (60) angeordnet ist.

38. Anhängekupplung nach einem der Ansprüche 35 bis 37, **dadurch gekennzeichnet, dass** das zweite Formschlusselement (162) einstückig an den Aufnahmekörper (60) angeformt ist.

39. Anhängekupplung nach einem der Ansprüche 35 bis 38, **dadurch gekennzeichnet, dass** das erste Formschlusselement (160) einstückig an das Anhängeelement (30) angeformt ist.

40. Anhängekupplung nach einem der Ansprüche 35 bis 39, **dadurch gekennzeichnet, dass** das erste Formschlusselement (160) im Bereich eines Übergangs vom Kugelhals (32) zum Lagerkörper (70) angeordnet ist.

41. Anhängekupplung nach einem der Ansprüche 35 bis 40, **dadurch gekennzeichnet, dass** der Aufnahmekörper (60) ein drittes Formschlusselement aufweist, mit welchem das erste Formschlusselement (160) in der Ruhestellung (R) in Eingriff bringbar ist.

42. Anhängekupplung nach Anspruch 41, **dadurch gekennzeichnet, dass** das dritte Formschlusselement identisch wie das zweite Formschlusselement (162) ausgebildet ist.

43. Anhängekupplung nach einem der voranstehenden Ansprüche, **dadurch gekennzeichnet, dass** der Lagerkörper (60) eine Führungsbahn (202) aufweist, auf welcher ein am Anhängeelement (30) angeordnetes Führungselement (200) aufliegt, wenn das Anhängeelement (30) außerhalb der Arbeitsstellung (A) und der Ruhestellung (R) steht.

## Claims

1. Trailer coupling for motor vehicles, comprising
a bearing element (20),
a towing element (30) pivotal in relation to the bearing element (20) between an operative position (A) and a rest position (R) about a pivot axis (52) of a pivot bearing (50) and displaceable at least in the operative position (A) between a pivoting position and a fixing position in the direction of the pivot axis (52), and a fixing device with which the towing element (30) is immovably fixable to the bearing element (20) at least in the operative position (A) and upon reaching the fixing position,
wherein the towing element (30) comprises a bearing body (70), wherein the bearing element (20) comprises a receiving body (60), with which the bearing body (70) enters into engagement at least in the fixing position, and in relation to which the bearing body (70) is movable between the pivoting position and the fixing position in a direction of displacement (156) and vice versa, wherein the bearing body (70) acts as bearing for the towing element (30) in both the pivoting position and the fixing position in relation to the receiving body (60), wherein the fixing device comprises a blocking device (90) blocking the bearing body (70) in relation to a movement in the direction of displacement (156) relative to the receiving body (60) and comprising at least one blocking body (88), which is arranged in the towing element (30), and which is movable in a manner acted upon by force from a release position in the direction of a blocking position, and at least one blocking surface (98), which is arranged on the bearing element (20), and with which the blocking body (88) enters into rear engagement in the blocking position, wherein the blocking device (90) comprises a blocking body drive (110), with which the blocking body (88) can be acted upon with a force moving the latter from the release position in the direction of the blocking position, wherein the blocking device (90) comprises an actuating device (140), which acts upon the blocking body drive (110), and with which it is possible to act upon a drive element (112) to counteract the action of the force of an elastic force accumulator (130), and wherein the actuating device (140) is arranged on the bearing element (20), and the blocking body drive (110) on the towing element (30).

2. Trailer coupling in accordance with the preceding claim, **characterized in that** the towing element (30) comprises a first end (34) carrying the coupling ball (36) and a second free end (82).

3. Trailer coupling in accordance with claim 2, **characterized in that** the bearing body (70) is arranged on the towing element (30) between the ball neck (32) and the free end (82).

4. Trailer coupling in accordance with any one of the preceding claims, **characterized in that** the receiving body (60) comprises a first opening (62) through which the bearing body (70), starting from the ball neck (32), engages the receiving body (60), and a second opening (104) located opposite the first opening (62).

5. Trailer coupling in accordance with any one of the preceding claims, **characterized in that** the blocking body drive (110) comprises the drive element (112), with which the blocking body (88) is movable from the release position into the blocking position.

6. Trailer coupling in accordance with claim 5, **characterized in that** the drive element (112) is acted upon by the elastic force accumulator (130).

7. Trailer coupling in accordance with any one of the preceding claims, **characterized in that** the drive element (112) is arranged for displacement in a direction of activation (116) relative to the element (70) receiving the drive element (112).

8. Trailer coupling in accordance with claim 7, **characterized in that** the drive element (112) comprises a drive connecting member (120) with a receiver (122) which the at least one blocking body (88) enters in the release position, and a displacement surface (124) with which the at least one blocking body (88) is movable from the release position into the blocking position.

9. Trailer coupling in accordance with claim 8, **characterized in that** the displacement surface (124) is followed by a wedge surface (126) which acts upon the blocking body (88) in the blocking position for readjustment in the direction of movement (92).

10. Trailer coupling in accordance with any one of the preceding claims, **characterized in that** the blocking device (90) holds positive-locking fixing elements (160, 162, 180, 182) of the fixing device in play-free abutment.

11. Trailer coupling in accordance with any one of the preceding claims, **characterized in that** the blocking device (90) acts upon the positive-locking fixing elements (160, 162, 180, 182) for readjustment in a play-free manner.

12. Trailer coupling in accordance with any one of the preceding claims, **characterized in that** the blocking device (90), in the blocking position of the at least one blocking body (88), on account of the latter cooperating with the blocking surface (98), acts with force upon the bearing body (70) in the direction of the fixing position.

13. Trailer coupling in accordance with claim 12, **characterized in that** the blocking surface (98) extends at an incline to the direction of movement (92).

14. Trailer coupling in accordance with any one of the preceding claims, **characterized in that** the at least one blocking body (88) and the blocking body drive (110) are arranged in the bearing body (70).

15. Trailer coupling in accordance with claim 14, **characterized in that** in the bearing body (70), the at least one blocking body (88) is guided for movement between the release position and the blocking position in a direction of movement (92) transversely to the direction of displacement (156) thereof.

16. Trailer coupling in accordance with any one of the preceding claims, **characterized in that** an actuating element (142) of the actuating device (140) projects beyond the free end (82) of the towing element (30).

17. Trailer coupling in accordance with claim 16, **characterized in that** the actuating element (142) is arranged coaxially with the pivot axis (52).

18. Trailer coupling in accordance with claim 17, **characterized in that** the actuating element (142) is mounted in the towing element (30) for rotation about the pivot axis (52).

19. Trailer coupling in accordance with claim 18, **characterized in that** the actuating element (142) can be acted upon in the area thereof that projects beyond the free end (82) of the towing element (30) in the direction of the free end (82) of the towing element (30) in order to eliminate the force of the elastic force accumulator (130) acting upon the drive element (112).

20. Trailer coupling in accordance with any one of the preceding claims, **characterized in that** with the blocking body (88) in release position, the towing element (30) is displaceable from the fixing position to the pivoting position with the actuating device (140).

21. Trailer coupling in accordance with claim 20, **characterized in that** in the pivoting position, the towing element (30) is positionable in a defined manner in the direction of displacement (156) by means of the actuating device (140).

22. Trailer coupling in accordance with any one of the preceding claims, **characterized in that** the actuating element (142) is coupled with a guide lever (146) of the actuating device (140).

23. Trailer coupling in accordance with claim 22, **characterized in that** the guide lever (146) is pivotally mounted on the bearing element (20).

24. Trailer coupling in accordance with any one of the preceding claims, **characterized in that** the actuating element (142') is constructed as a toothed rack (242) which meshes with a pinion (244) of the actuating device (140').

25. Trailer coupling in accordance with any one of the preceding claims, **characterized in that** the actuating device (140', 140") is provided with a firee-wheel mechanism (240, 250) provided between the actuating element (142) and an acting element (232, 279).

26. Trailer coupling in accordance with any one of the preceding claims, **characterized in that** in the pivoting position of the towing element (30), the receiving body (60) holds the at least one blocking body (88) in the release position.

27. Trailer coupling in accordance with claim 26, **characterized in that** the receiving body (60) comprises a surface (68) which acts upon the at least one blocking body (88).

28. Trailer coupling in accordance with any one of the preceding claims, **characterized in that** the at least one blocking body (88) is provided on the towing element (30) on a side of the bearing body (70), which is remote from the ball neck (32).

29. Trailer coupling in accordance with claim 28, **characterized in that** the at least one blocking body (88) is arranged in lateral guide openings (84) of the towing element (30) in the direction of movement (92).

30. Trailer coupling in accordance with claim 29, **characterized in that** the lateral guide openings (84) are arranged near the free end (82) of the towing element (30).

31. Trailer coupling in accordance with any one of the preceding claims, **characterized in that** the drive element (112) is arranged in a recess (114) in the towing element (30).

32. Trailer coupling in accordance with claim 31, **characterized in that** the recess (114) extends from an opening (118) provided at the free end (82) of the towing element (30) into the towing element (30).

33. Trailer coupling in accordance with claim 31 or 32, **characterized in that** the recess (114) extends coaxially with the pivot axis (52).

34. Trailer coupling in accordance with any one of claims 31 to 33, **characterized in that** the spring-elastic force accumulator (130) is supported on a bottom (132) of the recess (114), which is located opposite the opening (118).

35. Trailer coupling in accordance with any one of the preceding claims, **characterized in that** the bearing element (20) comprises a receiving body (60) with an opening (62), starting from which a bearing body (70) of the towing element (30) engages with the receiving body (60), and **in that** the towing element (30) comprises a first positive-locking element (160), which, in the pivoting position of the towing element (30), is in disengagement from a second positive-locking element (162) provided on the receiving body (60), and which, at least in the operative position (A) can be brought into engagement with the second positive-locking element (162) at the end area of the receiving body (60) when the towing element (30) is displaced from the pivoting position to the fixing position.

36. Trailer coupling in accordance with claim 35, **characterized in that** the second positive-locking element (162) is arranged on a side of the receiving body (60), which faces the ball neck (32).

37. Trailer coupling in accordance with either one of claims 35 to 36, **characterized in that** the second positive-locking element (162) is arranged in a front end area of the receiving body (60).

38. Trailer coupling in accordance with any one of claims 35 to 37, **characterized in that** the second positive-locking element (162) is integrally formed on the receiving body (60).

39. Trailer coupling in accordance with any one of claims 35 to 38, **characterized in that** the first positive-locking element (160) is integrally formed on the towing element (30).

40. Trailer coupling in accordance with any one of claims 35 to 39, **characterized in that** the first positive-locking element (160) is arranged in the area of a transition from the ball neck (32) to the bearing body (70).

41. Trailer coupling in accordance with any one of claims 35 to 40, **characterized in that** the receiving body (60) comprises a third positive-locking element, with which the first positive-locking element (160) can be brought into engagement in the rest position (R).

42. Trailer coupling in accordance with claim 41, **characterized in that** the third positive-locking element is identical in construction to the second positive-locking element (162).

43. Trailer coupling in accordance with any one of the preceding claims, **characterized in that** the bearing body (60) comprises a guide track (202), on which a guide element (200) arranged on the towing element (30) rests when the towing element (30) is outside the operative position (A) and the rest position (R).

## Revendications

1. Attelage de remorque pour véhicules automobiles comprenant
un élément de palier (20),
un élément de remorque (30) pouvant pivoter par rapport à l'élément de palier (20) entre une position de travail (A) et une position de repos (R) autour d'un axe de pivotement (52) d'un palier de pivotement (50) et mobile au moins dans la position de travail (A) entre une position de pivotement et une position de fixation en direction de l'axe de pivotement (52), et un dispositif de fixation avec lequel l'élément de remorque (30) peut être fixé de manière à être immobile sur l'élément de palier (20) au moins dans la position de travail (A) et lorsque la position de fixation est atteinte,
l'élément de remorque (30) présentant un corps de palier (70), l'élément de palier (20) présentant un corps de réception (60) avec lequel le corps de palier (70) vient en prise au moins dans la position de fixation et par rapport auquel le corps de palier (70) est mobile entre la position de pivotement et la position de fixation dans une direction de déplacement (156) et inversement, le corps de palier (70) logeant l'élément de remorque (30) aussi bien dans la position de pivotement que dans la position de fixation par rapport au corps de réception (60), et le dispositif de fixation présentant un dispositif de blocage (90) bloquant le corps de palier (70) par rapport à un mouvement dans la direction de déplacement (156) par rapport au corps de réception (60), lequel dispositif de blocage présente au moins un corps de verrouillage (88), disposé dans l'élément de remorque (30), mobile d'une position de déblocage en direction d'une position de verrouillage par action d'une force, et au moins une face de verrouillage (98) disposée sur l'élément de palier (20), avec laquelle face de verrouillage le corps de verrouillage (88) vient en prise par l'arrière dans la position de verrouillage, le dispositif de blocage (90) présentant un entraînement de corps de verrouillage (110), par lequel le corps de verrouillage (88) peut être soumis à l'action d'une force se déplaçant de la position de déblocage en direction de la position de verrouillage, le dispositif de déblocage (90) comprenant un dispositif d'actionnement (140) agissant sur l'entraînement de corps de verrouillage (110), lequel permet d'agir sur un élément d'entraînement (112) contre l'action d'une force d'un accumulateur de force élastique (130), et le dispositif d'actionnement (140) étant disposé sur l'élément de palier (20) et l'entraînement de corps de verrouillage (110) étant disposé sur l'élément de remorque (30).

2. Attelage de remorque selon la revendication précédente, **caractérisé en ce que** l'élément de remorque (30) présente une première extrémité (34) supportant la boule d'attelage (36) ainsi qu'une deuxième extrémité libre (82).

3. Attelage de remorque selon la revendication 2, **caractérisé en ce que** le corps de palier (70) est disposé sur l'élément de remorque (30) entre le collet de la boule (32) et l'extrémité libre (82).

4. Attelage de remorque selon l'une quelconque des revendications précédentes, **caractérisé en ce que** le corps de réception (60) présente une première ouverture (62), à travers laquelle le corps de palier (70) vient en prise avec le corps de réception (60) en partant du collet de la boule (32), et une deuxième ouverture (104) faisant face à la première ouverture (62).

5. Attelage de remorque selon l'une quelconque des revendications précédentes, **caractérisé en ce que** l'entraînement de corps de verrouillage (110) présente l'élément d'entraînement (112) lequel permet de déplacer le corps de verrouillage (88) de la position de déblocage dans la position de verrouillage,

6. Attelage de remorque selon la revendication 5, **caractérisé en ce que** l'élément d'entraînement (112) est sollicité par l'accumulateur de force élastique (130).

7. Attelage de remorque selon l'une quelconque des revendications précédentes, **caractérisé en ce que** l'élément d'entraînement (112) est disposé dans une direction d'activation (116) de façon mobile par rapport à l'élément (70) recevant ledit élément d'entraînement.

8. Attelage de remorque selon la revendication 7, **caractérisé en ce que** l'élément d'entraînement (112) présente une coulisse d'entraînement (120) avec une réception (122), dans laquelle l'au moins un corps de verrouillage (88) s'enfonce dans la position de déblocage, et une face de déplacement (124), laquelle permet de déplacer l'au moins un corps de verrouillage (88) de la position de déblocage dans la position de verrouillage.

9. Attelage de remorque selon la revendication 8, **caractérisé en ce qu'**une face de coin (126) se raccorde à la face de déplacement (124), laquelle sollicite le corps de verrouillage (88) en l'ajustant dans la position de verrouillage dans la direction de mouvement (92).

10. Attelage de remorque selon l'une quelconque des revendications précédentes, **caractérisé en ce que** le dispositif de blocage (90) maintient des éléments de fixation (160, 162, 180, 182) à liaison de forme du dispositif de fixation dans une position sans jeu.

11. Attelage de remorque selon l'une quelconque des revendications précédentes, **caractérisé en ce que** le dispositif de blocage (90) agit sur les éléments fixation (160, 162, 180, 182) à liaison de forme en les ajustant sans jeu.

12. Attelage de remorque selon l'une quelconque des revendications précédentes, **caractérisé en ce que** le dispositif de blocage (90) dans la position de verrouillage de l'au moins un corps de verrouillage (88) en raison de sa coopération avec la face de verrouillage (98), soumet à l'action d'une force le corps de palier (70) en direction de la position de fixation.

13. Attelage de remorque selon la revendication 12, **caractérisé en ce que** la face de verrouillage (98) s'étend de manière oblique par rapport à la direction de mouvement (92).

14. Attelage de remorque selon l'une quelconque des revendications précédentes, **caractérisé en ce que** l'a u moins un corps de verrouillage (88) et l'entraînement de corps de verrouillage (110) sont disposés dans le corps de palier (70).

15. Attelage de remorque selon la revendication 14, **caractérisé en ce que** dans le corps de palier (70), l'au moins un corps de verrouillage (88) est guidé de manière mobile entre la position de déblocage et la position de verrouillage dans une direction de mouvement (92) de manière transversale par rapport à la direction de déplacement (156) de celui-ci.

16. Attelage de remorque selon l'une quelconque des revendications précédentes, **caractérisé en ce qu'**un élément d'actionnement (142) du dispositif d'actionnement (140) est en saillie au-dessus de l'extrémité libre (82) de l'élément de remorque (30).

17. Attelage de remorque selon la revendication 16, **caractérisé en ce que** l'élément d'actionnement (142) est disposé de manière coaxiale par rapport à l'axe de pivotement (52).

18. Attelage de remorque selon la revendication 17, **caractérisé en ce que** l'élément d'actionnement (142) est logé dans l'élément de remorque (30) de manière rotative autour de l'axe de pivotement (52).

19. Attelage de remorque selon la revendication 18, **caractérisé en ce que** l'élément d'actionnement (142) pour enlever la force de l'accumulateur de force élastique (130) agissant sur l'élément d'entraînement (112), peut être sollicité dans sa zone en saillie au-dessus de l'extrémité libre (82) de l'élément de remorque (30) dans la direction de l'extrémité libre (82) de l'élément de remorque (30).

20. Attelage de remorque selon l'une quelconque des revendications précédentes, **caractérisé en ce qu'**avec le dispositif d'actionnement (140), lorsque le corps de verrouillage (88) est en position de déblocage, l'élément de remorque (30) est mobile de la position de fixation dans la position de pivotement.

21. Attelage de remorque selon la revendication 20, **caractérisé en ce que** l'élément de remorque (30) dans la position de pivotement peut être positionné de manière définie dans la direction de déplacement (156) au moyen du dispositif d'actionnement (140).

22. Attelage de remorque selon l'une quelconque des revendications précédentes, **caractérisé en ce que** l'élément d'actionnement (142) est couplé à un levier de guidage (146) du dispositif d'actionnement (140).

23. Attelage de remorque selon la revendication 22, **caractérisé en ce que** le levier de guidage (146) est logé de manière pivotante sur l'élément de palier (20).

24. Attelage de remorque selon l'une quelconque des revendications précédentes, **caractérisé en ce que** l'élément d'actionnement (142') est réalisé comme une crémaillère (242) qui s'engrène avec un pignon (244) du dispositif d'actionnement (140').

25. Attelage de remorque selon l'une quelconque des revendications précédentes, **caractérisé en ce que** le dispositif d'actionnement (140', 140") est muni d'une roue libre (240, 250) prévue entre l'élément d'actionnement (142) et un élément d'action (232, 279).

26. Attelage de remorque selon l'une quelconque des revendications précédentes, **caractérisé en ce que** le corps de réception (60), dans la position de pivotement de l'élément de remorque (30), maintient l'au moins un corps de verrouillage (88) dans la position de déblocage.

27. Attelage de remorque selon la revendication 26, **caractérisé en ce que** le corps de réception (60) présente une face (68) agissant sur l'au moins un corps de verrouillage (88).

28. Attelage de remorque selon l'une quelconque des revendications précédentes, **caractérisé en ce que** l'au moins un corps de verrouillage (88) est prévu sur un côté du corps de palier (70) détourné du collet de boule (32), sur l'élément de remorque (30).

29. Attelage de remorque selon la revendication 28, **caractérisé en ce que** l'au moins un corps de verrouillage (88) est disposé dans des ouvertures de guidage latérales (84) de l'élément de remorque (30) dans la direction de mouvement (92).

30. Attelage de remorque selon la revendication 29, **caractérisé en ce que** les ouvertures de guidage latérales (84) sont disposées à proximité de l'extrémité libre (82) de l'élément de remorque (30).

31. Attelage de remorque selon l'une quelconque des revendications précédentes, **caractérisé en ce que** l'élément d'entraînement (112) est disposé dans un évidement (114), dans l'élément de remorque (30).

32. Attelage de remorque selon la revendication 31, **caractérisé en ce que** l'évidement (114) s'étend depuis une ouverture (118) prévue sur l'extrémité libre (82) de l'élément de remorque (30) dans l'élément de remorque (30).

33. Attelage de remorque selon la revendication 31 ou 32, **caractérisé en ce que** l'évidement (114) s'étend de manière coaxiale par rapport à l'axe de pivotement (52).

34. Attelage de remorque selon l'une quelconque des revendications 31 à 33, **caractérisé en ce que** l'accumulateur de force élastique (130) s'appuie sur un fond (132) de l'évidement (114) faisant face à l'ouverture (118).

35. Attelage de remorque selon l'une quelconque des revendications précédentes, **caractérisé en ce que** l'élément de palier (20) présente un corps de réception (60) avec une ouverture (62), en partant de laquelle un corps de palier (70) de l'élément de remorque (30) vient en prise avec le corps de réception (60), et **en ce que** l'élément de remorque (30) présente un premier élément à liaison de forme (160) qui n'est pas en prise avec un deuxième élément à liaison de forme (162) prévu sur le corps de réception (60) dans la position de pivotement de l'élément de remorque (30) et lequel au moins dans la position de travail (A) lorsque l'élément de remorque (30) est déplacé de la position de pivotement à la position de fixation, peut être amené en prise avec le deuxième élément à liaison de forme (162) sur la zone d'extrémité du corps de réception (60).

36. Attelage de remorque selon la revendication 35, **caractérisé en ce que** le deuxième élément à liaison de forme (162) est disposé sur un côté du corps de réception (60) tourné vers le collet de la boule (32).

37. Attelage de remorque selon l'une quelconque des revendications 35 à 36, **caractérisé en ce que** le deuxième élément à liaison de forme (162) est disposé dans une zone frontale du corps de réception (60).

38. Attelage de remorque selon l'une quelconque des revendications 35 à 37, **caractérisé en ce que** le deuxième élément à liaison de forme (162) est formé de manière monobloc sur le corps de réception (60).

39. Attelage de remorque selon l'une quelconque des revendications 35 à 38, **caractérisé en ce que** le premier élément à liaison de forme (160) est formé de manière monobloc sur l'élément de remorque (30).

40. Attelage de remorque selon l'une quelconque des revendications 35 à 39, **caractérisé en ce que** le premier élément à liaison de forme (160) est disposé à proximité d'un passage du collet de boule (32) vers le corps de palier (70).

41. Attelage de remorque selon l'une quelconque des revendications 35 à 40, **caractérisé en ce que** le corps de réception (60) présente un troisième élément à liaison de forme, avec lequel le premier élément à liaison de forme (160) peut être amené en prise dans la position de repos (R).

42. Attelage de remorque selon la revendication 41, **caractérisé en ce que** le troisième élément à liaison de forme est réalisé de manière identique au deuxième élément à liaison de forme (162).

43. Attelage de remorque selon l'une quelconque des revendications précédentes, **caractérisé en ce que** le corps de palier (60) présente une voie de guidage (202), sur laquelle repose un élément de guidage (200) disposé sur l'élément de remorque (30) lorsque l'élément de remorque (30) n'est pas en position de travail (A) et en position de repos (R).
